# DEMANDE DE BREVET EUROPEEN

(11) **EP 3 758 371 A1**
(43) Date de publication de la demande: **30.12.2020**
(21) Numéro de dépôt: 20182219.4
(22) Date de dépôt: 25.06.2020
(51) Int. Cl.: H04N 19/107, H04N 19/114, H04N 19/142, H04N 19/172, H04N 19/179, H04N 21/2343

(54) **PROCÉDÉ DE TRAITEMENT D'UN ENSEMBLE D'IMAGES D'UNE SÉQUENCE VIDÉO**

(30) Priorité: 26.06.2019 FR 1906930
(71) Demandeur: ATEME, 78140 Velizy Villacoublay (FR)
(72) Inventeur: LAVAUD, Anne-Lyse, 92240 MALAKOFF (FR)
(74) Mandataire: Plasseraud IP

(57) **Abrégé**

Un procédé, mis en œuvre par des moyens informatique, de traitement d'une séquence vidéo comprenant un ensemble d'images est proposé, qui comprend : obtenir une information indiquant au moins une image dans l'ensemble d'images à encoder selon un mode de codage de type à prédiction par corrélation spatiale, déterminer, dans l'ensemble d'images, des sous-ensembles d'images consécutifs, et encoder la séquence vidéo sur la base des sous-ensembles d'images consécutifs déterminés, dans lequel les tailles respectives de certains au moins des sous-ensembles d'images sont fonctions de l'au moins une image à encoder selon le mode de codage de type à prédiction par corrélation spatiale.

## Description

### Domaine technique

La présente invention se rapporte à un procédé de traitement d'une séquence vidéo et d'un dispositif pour la mise en œuvre de ce procédé.

### Technique antérieure

La distribution ou diffusion en mode dynamique (en anglais, « live ») ou sur demande de contenus multimédia transportés par des flux vidéo (appelée également « streaming vidéo ») est devenue depuis quelques années une pratique incontournable. La demande croissante de la part des consommateurs ainsi que l'augmentation en résolution des données vidéos permettant d'améliorer l'expérience du consommateur nécessitent des optimisations régulières, que ce soit des procédés, ou des infrastructures permettant leur mise en œuvre.

Dans le domaine de la vidéo, et plus particulièrement du streaming vidéo, l'encodage d'une séquence vidéo à transmettre peut être effectué en procédant à un découpage en segments de la séquence vidéo, parfois appelé « chunking », préalablement à l'encodage des segments, appelés « chunks ».

L'utilisation du transport par segments dans les systèmes actuels prend en compte des contraintes qui visent à assurer que le changement de profil d'un niveau de qualité à un autre n'entraine pas d'impact visuel qui pourrait être inconfortable pour un utilisateur.

Ces contraintes peuvent induire des baisses de performance de l'encodage vidéo, notamment du point de vue de l'efficacité globale d'encodage d'une séquence vidéo.

### Résumé

La présente divulgation vient améliorer la situation.

A cet effet, selon un premier aspect, un procédé de traitement d'une séquence vidéo comportant un ensemble d'images est proposé. Le procédé proposé comprend : obtenir une information indiquant au moins une image dans l'ensemble d'images à encoder selon un mode de codage de type à prédiction par corrélation spatiale ; déterminer, dans l'ensemble d'images, des sous-ensembles d'images consécutifs ; et encoder la séquence vidéo sur la base des sous-ensembles d'images consécutifs déterminés ; dans lequel les tailles respectives de certains au moins des sous-ensembles d'images sont fonctions de l'au moins une image à encoder selon le mode de codage de type à prédiction par corrélation spatiale.

Le procédé proposé permet avantageusement de définir, à partir d'une séquence vidéo comprenant un ensemble d'images, des segments (en anglais « chunks ») de tailles variables en ce que la taille d'un segment peut être déterminée indépendamment de la taille d'un autre segment défini pour une même séquence vidéo. L'utilisation de découpage en séquences d'une séquence vidéo, par exemple pour la distribution de la séquence en mode dynamique (mode « live »), ou en mode statique (mode « video on demand » ou « vidéo à la demande »), par exemple sur un réseau de type service par contournement (en anglais, « Over the top »), est ainsi rendue plus flexible, en permettant de se libérer de certaines au moins des contraintes qui sont typiquement appliquées dans les systèmes conventionnels, et notamment la contrainte imposant des segments de taille fixe.

Avantageusement, le procédé proposé tire parti de l'information selon laquelle une ou plusieurs images de l'ensemble d'images du segment vidéo sont à encoder selon un mode de codage de type à prédiction par corrélation spatiale, comme par exemple un mode de codage intra. Chacune de ces images peut être utilisée pour définir le début d'un segment, évitant ainsi de sélectionner dans l'ensemble d'images des images non identifiées initialement comme devant être encodées selon un mode de codage de type à prédiction par corrélation spatiale, et qui le deviennent car prévues pour être l'image de début d'un segment, et ainsi à augmenter le nombre d'images devant être encodées selon un mode de codage de type à prédiction par corrélation spatiale pour le segment vidéo, au détriment de l'efficacité d'encodage. Dès lors, l'utilisation du procédé proposé lors d'un streaming adaptatif d'une séquence vidéo ou d'un flux vidéo distribué en mode dynamique permet par exemple de faire varier la taille des segments (« chunks ») en fonction d'images constituant la séquence ou le flux vidéo, afin d'améliorer l'efficacité globale d'encodage en fonction d'informations propres à la séquence vidéo ou au flux vidéo.

Avantageusement, le procédé proposé ne dépend pas du protocole de transport utilisé, et peut être mis en œuvre avec tout protocole de transport approprié pour le transport de segments encodés de séquence vidéo.

De plus, le procédé proposé convient particulièrement bien, bien que de façon non exclusive, pour l'encodage ou la compression d'une séquence vidéo ou d'un flux vidéo selon un schéma du type H.264, H.265, H.262, MPEG-2, AVC, ou HEVC. Mais il convient aussi pour l'encodage d'images d'un ensemble d'images d'une séquence vidéo selon tout schéma d'encodage vidéo.

Dans un ou plusieurs modes de réalisation, l'obtention d'une information indiquant au moins une image dans l'ensemble d'images à encoder selon un mode de codage de type à prédiction par corrélation spatiale peut comprendre la détermination, dans l'ensemble d'images, d'au moins une image à encoder selon un mode de codage de type à prédiction par corrélation spatiale. Cette détermination peut par exemple être effectuée par analyse de l'ensemble d'images de la séquence vidéo, pour y déterminer la ou les images à encoder selon un mode de codage de type à prédiction par corrélation spatiale, par exemple du fait que ces images correspondent à des changements de scène respectifs dans la séquence vidéo. De plus, l'obtention d'une information indiquant au moins une image dans l'ensemble d'images à encoder selon un mode de codage de type à prédiction par corrélation spatiale peut comprendre l'obtention d'une information indiquant qu'une requête de création de segment (parfois appelé ordre externe) a été reçue pour une ou plusieurs images de l'ensemble d'images.

Ainsi, dans un ou plusieurs modes de réalisation, l'au moins une image à encoder selon un mode de codage de type à prédiction par corrélation spatiale peut correspondre à un changement de scène dans la séquence vidéo, ou à une requête de création de sous-segment.

Dans un ou plusieurs modes de réalisation, la détermination d'au moins un sous-ensemble peut comprendre la détermination, parmi la/les images à encoder selon le mode de codage de type à prédiction par corrélation spatiale, d'une image de début du sous-ensemble. Un ou plusieurs sous-ensembles (ou segments) peuvent ainsi être définis par la sélection d'une image à encoder selon le mode de codage de type à prédiction par corrélation spatiale comme image de début de sous-ensemble. L'image de fin d'un tel sous-ensemble peut alors être sélectionnée sur la base de l'image de début du sous-ensemble suivant immédiatement le sous-ensemble en cours de définition, par exemple en choisissant l'image précédant immédiatement l'image de début du sous-ensemble suivant immédiatement le sous-ensemble en cours de définition.

Dans un ou plusieurs modes de réalisation, les sous-ensembles peuvent être définis de telle sorte que chaque image de la séquence appartienne à au moins un sous-ensemble d'images déterminé à partir de la séquence.

Dans un ou plusieurs modes de réalisation, au moins une image de la pluralité d'images à encoder selon un mode de codage de type à prédiction par corrélation spatiale est déterminée sur la base d'une correspondance avec un changement de scène dans la séquence vidéo.

Dans un ou plusieurs modes de réalisation, au moins une image de la pluralité d'images à encoder selon un mode de codage de type à prédiction par corrélation spatiale est déterminée sur la base d'une correspondance avec un ordre externe. Ainsi, avantageusement, il est possible de respecter des contraintes de diffusion externes exigées par un utilisateur. Ces contraintes peuvent être de natures différentes, comme l'insertion de publicité dans la séquence vidéo, de bandes annonces, d'informations, ou de tous autres éléments destinés à être diffusé.

Dans un ou plusieurs modes de réalisation, le mode de codage de type à prédiction par corrélation spatiale est un mode intra.

Ainsi, dans un ou plusieurs modes de réalisation, un ou plusieurs des segments constitués peut commencer par image de type intra correspondant à un changement de scène ou un ordre externe. Comme discuté ci-dessus, un avantage est l'économie du nombre d'images de type intra étant donné que ces images contribuent au coût élevé du débit dans une séquence vidéo. Dans la mesure où une bonne efficacité de codage du segment préconise de coder chaque changement de scène du segment par une image de type intra, le positionnement d'un nombre maximum d'images déterminées comme images intra de changement de scène comme premières images de segments respectif permet avantageusement de diminuer le nombre d'images intra imposées par le processus de segmentation de la séquence vidéo.

Dans un ou plusieurs modes de réalisation, la détermination d'au moins un sous-ensemble peut comprendre : déterminer, dans l'ensemble d'images, une image de début du sous-ensemble ; déterminer, parmi les images positionnées dans la séquence à partir de l'image de début du sous-ensemble, une image de début du sous-ensemble suivant immédiatement, dans une suite des sous-ensembles d'images consécutifs, le sous-ensemble en fonction d'une image parmi la pluralité d'images à encoder selon le mode de codage de type à prédiction par corrélation spatiale ; déterminer, parmi les images positionnées dans la séquence à partir de l'image de début du sous-ensemble, une image de fin du sous-ensemble sur la base de l'image de début du sous-ensemble suivant ; déterminer le sous-ensemble comme comprenant l'image de début du sous-ensemble, l'image de fin du sous-ensemble, et les images de l'ensemble d'images positionnées dans la séquence entre l'image de début du sous-ensemble et l'image de fin du sous-ensemble.

Ainsi, un schéma de segmentation d'un ensemble d'images correspondant à une séquence vidéo peut procéder à la définition d'un segment en déterminant, dans l'ensemble d'images, une image de début du segment en cours de définition (par exemple en sélectionnant une image précédemment identifiée comme devant être encodée selon un mode intra). Une fois l'image de début de segment déterminée, l'ensemble d'images peut être parcouru à partir de cette image de segment, pour y déterminer une image de début du segment suivant (dans une suite de segments consécutifs, par exemple définis séquentiellement au fur et à mesure de la segmentation de la séquence vidéo) le segment en cours de définition. L'image de début du segment suivant peut être déterminée de différentes manières en fonction du mode de réalisation, par exemple en sélectionnant une image précédemment identifiée comme devant être encodée selon un mode intra. Selon un autre exemple, l'image de début du segment suivant peut être déterminée pour respecter une contrainte, par exemple sur la taille maximale des segments à définir. L'image de fin du segment en cours de définition peut alors être déterminée sur la base de l'image de début du segment suivant, et le segment en cours de définition être défini comme étant le segment comprenant son image de début, son image de fin, ainsi que les images positionnées dans la séquence vidéo entre l'image de début et l'image de fin.

Dans un ou plusieurs modes de réalisation, la détermination d'au moins un sous-ensemble peut utiliser un critère relatif à la taille de l'au moins un sous-ensemble. Par exemple, le critère peut être un critère de taille minimale et/ou un critère de taille maximale. Cela permet avantageusement de prendre en compte une taille minimale et/ou une taille maximale, lors de la définition des segments en fonction des images déterminées comme à encoder selon un mode de codage de type à prédiction par corrélation spatiale.

Par exemple, dans un ou plusieurs modes de réalisation, la détermination d'au moins un sous-ensemble peut comprendre : déterminer, dans l'ensemble d'images, une image de début du sous-ensemble ; déterminer, parmi les images positionnées dans la séquence à partir de l'image de début du sous-ensemble, une première image candidate dans la pluralité d'images à encoder selon un mode de codage du type à prédiction par corrélation spatiale ; déterminer une distance entre l'image de début du sous-ensemble et la première image candidate ; comparer la distance à un seuil correspondant à un critère de taille minimale ou à un critère de taille maximale ; déterminer, dans l'ensemble d'images, une image de fin du sous-ensemble sur la base de la comparaison au seuil.

Dans un ou plusieurs modes de réalisation, le procédé proposé peut comprendre, lorsque le seuil correspond à une taille minimale : lorsque la distance est inférieure au seuil, déterminer, parmi les images positionnées dans la séquence à partir de la première image candidate, une deuxième image candidate dans la pluralité d'images à encoder selon un mode de codage du type à prédiction par corrélation spatiale ; déterminer le sous-ensemble en utilisant la deuxième image candidate.

Dans un ou plusieurs modes de réalisation, le procédé proposé peut comprendre, lorsque le seuil correspond à une taille maximale : lorsque la distance est supérieure au seuil, déterminer, parmi les images positionnées dans la séquence à partir de l'image de début du sous-ensemble, une image de fin du sous-ensemble sur la base d'une taille prédéterminée de sous-segment.

En fonction du mode de réalisation, la taille d'un segment peut être exprimée en tant que durée en tenant compte de la fréquence d'images (parfois aussi dénommée fréquence trames ou, en anglais, « frame rate »), ce qui permet d'associer une durée à une image de la séquence vidéo. Une taille exprimée en nombre d'images peut ainsi être exprimée par la durée à laquelle ce nombre d'images correspond en tenant compte de la fréquence d'images. Aussi, dans un ou plusieurs modes de réalisation, les tailles respectives des sous-ensembles peuvent être définies en fonction de contraintes de durée. Il est alors avantageusement possible d'encoder un segment selon une taille définie comme la plus appropriée pour ce segment.

Ainsi, avantageusement, les contraintes peuvent être définies en amont par l'utilisateur afin de s'adapter aux conditions d'encodage ou d'infrastructures réseaux.

Dans un ou plusieurs modes de réalisation, le procédé proposé peut en outre comprendre : déterminer, dans l'ensemble d'images, une pluralité d'images de référence dont les positions dans la séquence sont deux-à-deux séparées par une distance prédéterminée ; déterminer, dans l'ensemble d'images, pour au moins un sous-ensemble, une image de début du sous-ensemble ; déterminer une image de référence positionnée dans la séquence à partir de l'image de début du sous-ensemble ; déterminer, dans la pluralité d'images à encoder selon un mode de codage de type à prédiction par corrélation spatiale, parmi les images positionnées dans la séquence autour de l'image de référence et à une distance inférieure à un seuil de variation prédéterminé, une image de début du sous-ensemble suivant immédiatement, dans une suite des sous-ensembles d'images consécutifs, le sous-ensemble ; déterminer, parmi les images positionnées dans la séquence à partir de l'image de début du sous-ensemble, une image de fin du sous-ensemble sur la base de l'image de début du sous-ensemble suivant.

Dans un ou plusieurs modes de réalisation, l'ordre externe est prioritaire sur une ou plusieurs, voire sur toutes les autres contraintes utilisées. Ainsi avantageusement, même en présence de contraintes de durée, un utilisateur peut imposer l'insertion d'une autre séquence vidéo sans délai. Les séquences vidéo insérées peuvent être par exemple de la publicité, ciblée ou non, ou encore des messages à caractère informatif pouvant être prioritaires.

Selon un autre aspect, un procédé de traitement d'une séquence vidéo comportant un ensemble d'images est proposé, qui comprend : déterminer dans l'ensemble d'images une pluralité d'images à encoder selon un mode de codage de type à prédiction par corrélation spatiale ; déterminer, dans l'ensemble d'images, des sous-ensembles d'images consécutifs dont les tailles respectives sont fonctions d'images à encoder selon le mode de codage de type à prédiction par corrélation spatiale ; et encoder la séquence vidéo sur la base des sous-ensembles d'images consécutifs déterminés.

Selon un autre aspect, il est proposé un dispositif d'encodage de séquence vidéo, comprenant une interface d'entrée configurée pour recevoir un ensemble d'images de la séquence vidéo; et une unité d'encodage d'images, couplée de manière opérationnelle à l'interface d'entrée, et configurée pour effectuer un traitement de la séquence vidéo.

Selon un autre aspect, il est proposé un programme d'ordinateur, chargeable dans une mémoire associée à un processeur, et comprenant des portions de code pour la mise en œuvre des étapes du procédé.

Selon un autre aspect, il est proposé un ensemble de données représentant, par exemple par voie de compression ou d'encodage, un programme d'ordinateur.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à encoder une séquence vidéo.

### Brève description des dessins

D'autres caractéristiques, détails et avantages apparaîtront à la lecture de la description détaillée ci-après, et à l'analyse des dessins annexés, sur lesquels :
**Fig. 1**

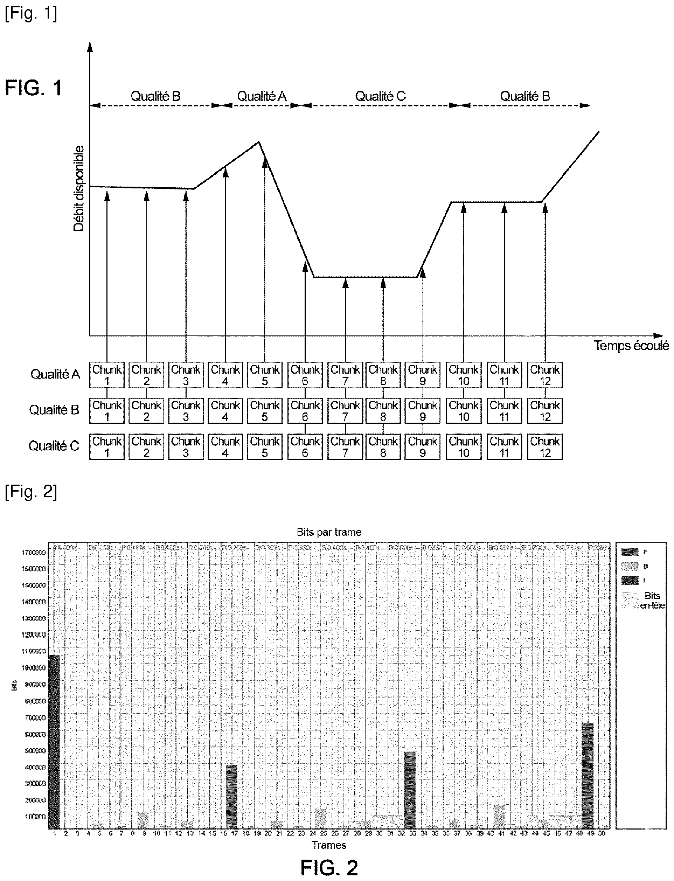

   [Fig. 1] montre un exemple de découpage en segments selon un ou plusieurs modes de réalisation.
**Fig. 2**
   [Fig. 2] illustre le nombre de bits nécessaire à l'encodage d'images d'un segment vidéo, en fonction du mode d'encodage utilisé pour chaque image.
**Fig. 3a**

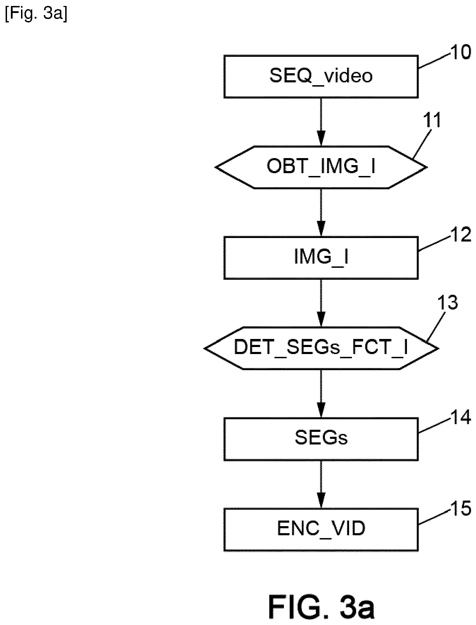

   [Fig. 3a] illustre le procédé proposé selon un ou plusieurs modes de réalisation.
**Fig. 3b**

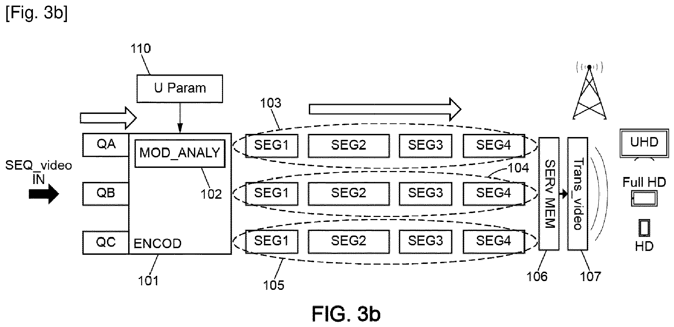

   [Fig. 3b] illustre un exemple d'architecture réseau comportant un dispositif configuré pour la mise en œuvre du procédé proposé selon un ou plusieurs modes de réalisation.
**Fig. 4a**

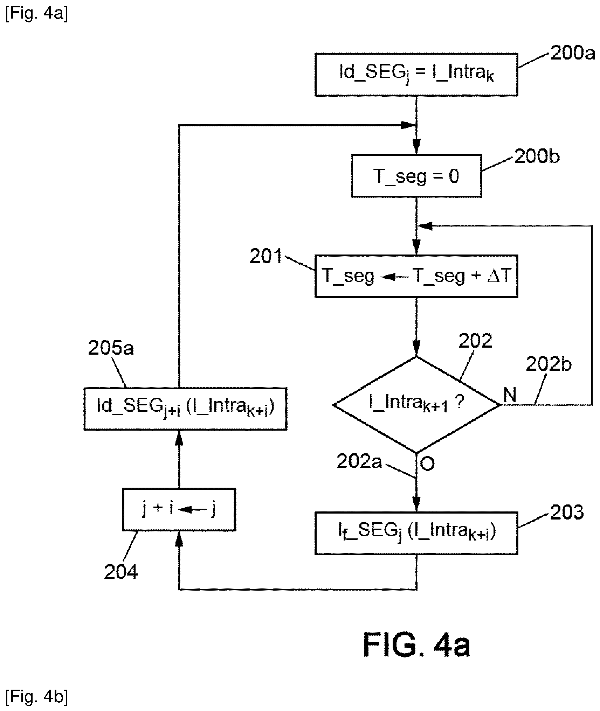

   [Fig. 4a] illustre un exemple de mise en œuvre du procédé proposé selon un ou plusieurs modes de réalisation.
**Fig. 4b**

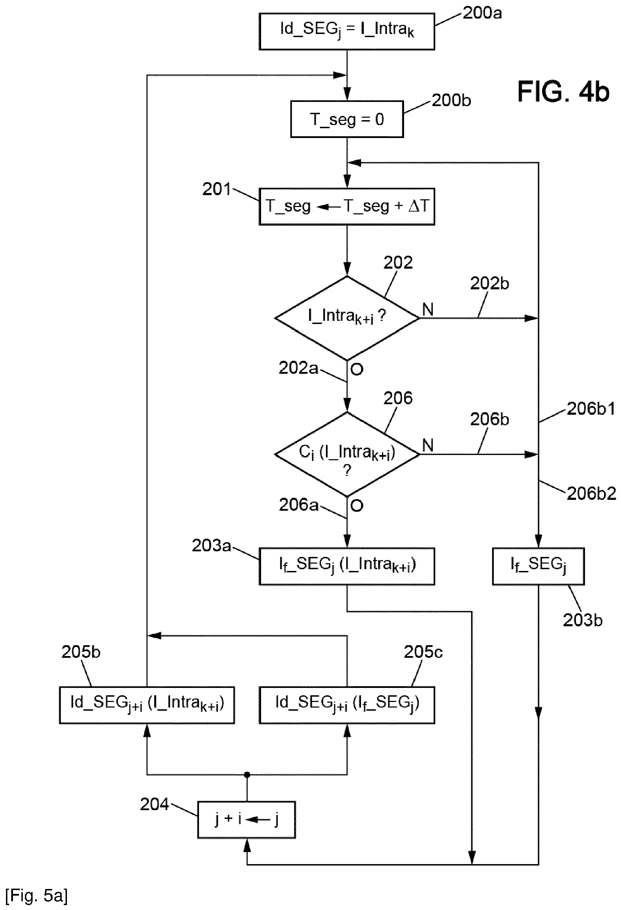

   [Fig. 4b] illustre un exemple de mise en œuvre du procédé proposé selon un ou plusieurs modes de réalisation.
**Fig. 5a**

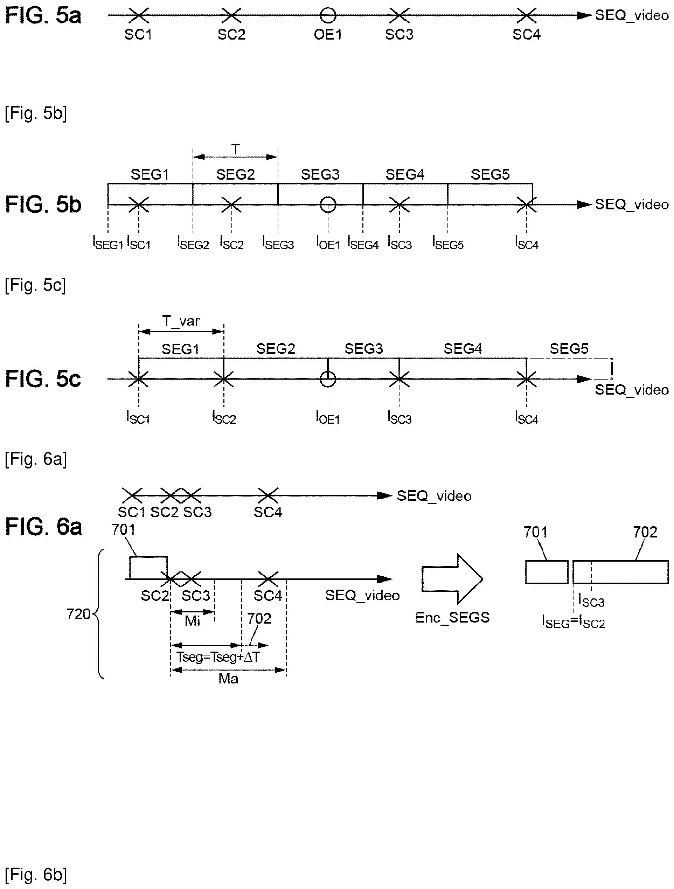

   [Fig. 5a] illustre un exemple de mise en œuvre du procédé proposé selon un ou plusieurs modes de réalisation.
**Fig. 5b**
   [Fig. 5b] illustre un exemple de segmentation d'une séquence vidéo avec des segments de taille fixe.
**Fig. 5c**
   [Fig. 5c] illustre un exemple de mise en œuvre du procédé proposé selon un ou plusieurs modes de réalisation.
**Fig. 6a**
   [Fig. 6a] illustre un exemple non limitatif de mise en œuvre du procédé proposé dans lequel une contrainte de taille de segment est utilisée.
**Fig. 6b**

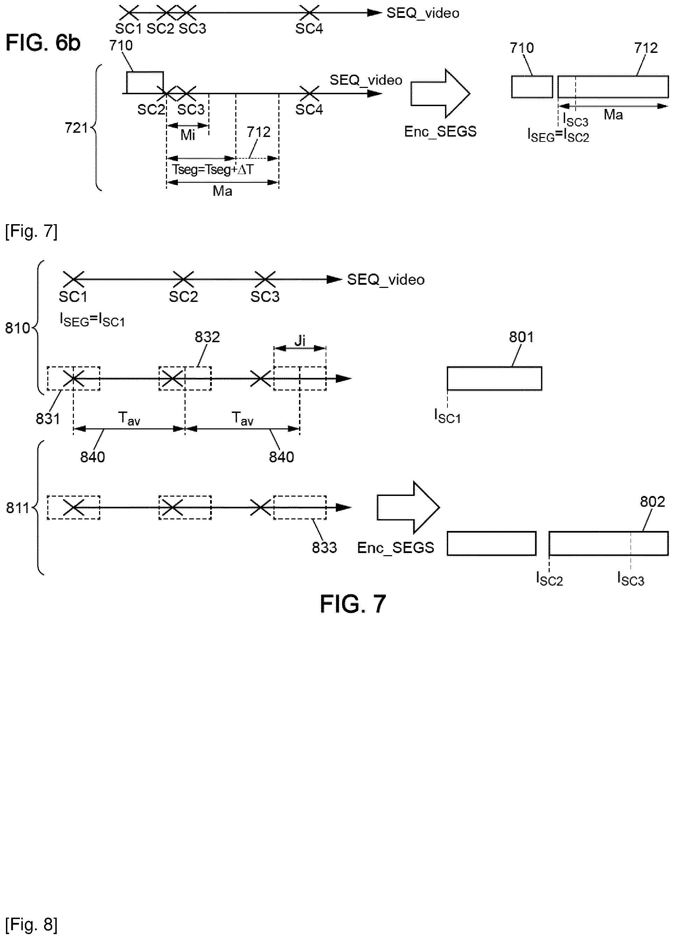

   [Fig. 6b] illustre un exemple non limitatif de mise en œuvre du procédé proposé dans lequel une contrainte de taille de segment est utilisée.
**Fig. 7**
   [Fig. 7] illustre une mise en œuvre du procédé proposé selon un ou plusieurs modes de réalisation.
**Fig. 8**

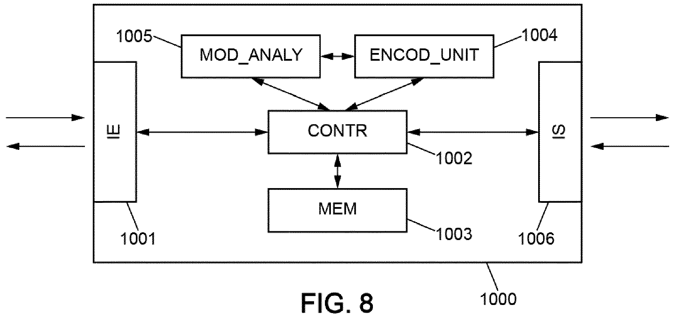

   [Fig. 8] illustre un exemple de dispositif d'encodage d'une séquence vidéo pour la mise en œuvre du procédé proposé.

### Description des modes de réalisation

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description.

La présente description fait référence à des fonctions, moteurs, unités, modules, plateformes, et illustrations de diagrammes des méthodes et dispositifs selon un ou plusieurs modes de réalisation. Chacun des fonctions, moteurs, modules, plateformes, unités et diagrammes décrits peut être mis en œuvre sous forme matérielle, logicielle (y compris sous forme de logiciel embarqué («firmware»), ou de «middleware»), microcode, ou toute combinaison de ces derniers. Dans le cas d'une mise en œuvre sous forme logicielle, les fonctions, moteurs, unités, modules et/ou illustrations de diagrammes peuvent être mis en œuvre par des instructions de programme d'ordinateur ou du code logiciel, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code logiciel exécuté(es) sur l'ordinateur ou l'appareil ou dispositif programmable de traitement de données, constituent des moyens de mise en œuvre de ces fonctions.

Les modes de réalisation d'un support lisible par ordinateur incluent, de manière non exhaustive, des supports de stockage informatique et des supports de communication, y compris tout support facilitant le transfert d'un programme d'ordinateur d'un endroit vers un autre. Par «support(s) de stockage informatique», on entend tout support physique pouvant être accédé par ordinateur. Les exemples de support de stockage informatique incluent, de manière non limitative, les disques ou composants de mémoire flash ou tous autres dispositifs à mémoire flash (par exemple des clés USB, des clés de mémoire, des sticks mémoire, des disques-clés), des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires («smart cards»), des mémoires de type SSD («Solid State Drive»), et toute autre forme de support utilisable pour transporter ou stocker ou mémoriser des données ou structures de données qui peuvent être lues par un processeur d'ordinateur.

En outre, diverses formes de support lisible par ordinateur peuvent transmettre ou porter des instructions vers un ordinateur, telles qu'un routeur, une passerelle, un serveur, ou tout équipement de transmission de données, qu'il s'agisse de transmission filaire (par câble coaxial, fibre optique, fils téléphoniques, câble DSL, ou câble Ethernet), sans-fil (par infrarouge, radio, cellulaire, microondes), ou des équipements de transmission virtualisés (routeur virtuel, passerelle virtuelle, extrémité de tunnel virtuel, pare-feu virtuel). Les instructions peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

De plus, les termes «notamment», «par exemple», «exemple», «typiquement» sont utilisés dans la présente description pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Par «serveur» ou «plateforme», on entend dans la présente description tout point de service (virtualisé ou non) ou dispositif opérant des traitements de données, une ou plusieurs bases de données, et/ou des fonctions de communication de données. Par exemple, et de manière non limitative, le terme «serveur» ou le terme «plateforme» peut faire référence à un processeur physique couplé de manière opérationnelle avec des fonctions de communication, de base de données et de stockage de données associées, ou faire référence à un réseau, un groupe, un ensemble ou un complexe de processeurs et des équipements de stockage de données et de mise en réseau associés, ainsi qu'un système d'exploitation et un ou plusieurs système(s) de base de données et des logiciels applicatifs en support des services et fonctions fournies par le serveur. Un dispositif informatique peut être configuré pour envoyer et recevoir des signaux, par réseau(x) de transmission sans-fil et/ou filaire, ou peut être configuré pour des traitements et/ou du stockage de données ou de signaux, et peut donc fonctionner en tant que serveur. Ainsi, des équipements configurés pour opérer en tant que serveur peuvent inclure, à titre d'exemples non limitatifs, des serveurs dédiés montés sur rack, des ordinateurs de bureau, des ordinateurs portables, des passerelles de service (parfois appelées «box» ou «passerelle résidentielle»), des décodeurs multimédia (parfois appelés «set-top boxes»), des équipements intégrés combinant diverses fonctionnalités, telles que deux ou plus des fonctionnalités mentionnées ci-dessus. Les serveurs peuvent fortement varier dans leur configuration ou leurs capacités, mais un serveur inclura généralement une ou plusieurs unité(s) centrale(s) de traitement et une mémoire. Un serveur peut aussi inclure un ou plusieurs équipement(s) de mémoire de masse, une ou plusieurs alimentation(s) électrique(s), une ou plusieurs interface(s) réseau sans-fil et/ou filaire(s), une ou plusieurs interface(s) d'entrée/sortie, un ou plusieurs système(s) d'exploitation, tel(s) que Windows Server, Mac OS X, Unix, Linux, FreeBSD, or un équivalent.

Les termes «réseau» et «réseau de communication» tels qu'utilisés dans la présente description font référence à une ou plusieurs liaisons de données qui peuvent coupler ou connecter des équipements, éventuellement virtualisés, de manière à permettre le transport de données électroniques entre des systèmes informatiques et/ou des modules et/ou d'autres dispositifs ou équipements électroniques, tel qu'entre un serveur et un dispositif client ou d'autres types de dispositifs, y compris entre dispositifs sans fil couplés ou connectés par un réseau sans fil, par exemple. Un réseau peut aussi inclure une mémoire de masse pour stocker des données, tel qu'un NAS (en anglais «network attached storage», un SAN (en anglais «storage area network»), ou toute autre forme de support lisible par un ordinateur ou par une machine, par exemple. Un réseau peut comprendre, en tout ou partie, le réseau Internet, un ou plusieurs réseaux locaux (en anglais «local area networks», ou LANs), un ou plusieurs réseaux de type WAN (en anglais «wide area networks»), des connexions de type filaire, des connexions de type sans fil, de type cellulaire, ou toute combinaison de ces différents réseaux. De manière similaire, des sous-réseaux peuvent utiliser différentes architectures ou être conformes ou compatibles avec différents protocoles, et inter-opérer avec des réseaux de plus grande taille. Différents types d'équipements peuvent être utilisés pour rendre interopérables différentes architectures ou différents protocoles. Par exemple, un routeur peut être utilisé pour fournir une liaison de communication ou une liaison de données entre deux LANs qui seraient autrement séparés et indépendants.

Les termes «couplé de manière opérationnelle», «couplé», «monté», «connecté» et leurs variantes et formes diverses utilisés dans la présente description font référence à des couplages, connexions, montages, qui peuvent être directs ou indirects, et comprennent notamment des connexions entre équipements électroniques ou entre des portions de tels équipements qui permettent des opérations et fonctionnements tels que décrits dans la présente description. De plus, les termes «connectés» et «couplés» ne sont pas limités à des connections ou des couplages physiques ou mécaniques. Par exemple, un couplage de manière opérationnelle peut inclure une ou plusieurs connexion(s) filaire(s) et/ou une ou plusieurs connexion(s) sans-fil entre deux équipements ou plus qui permettent des liaisons de communication simplex et/ou duplex entre les équipements ou des portions des équipements. Selon un autre exemple, un couplage opérationnel ou une connexion peut inclure un couplage par liaison filaire et/ou sans-fil pour permettre des communications de données entre un serveur du système proposé et un autre équipement du système.

Les termes «application» ou «programme applicatif» (AP) et leurs variantes («app», «webapp», etc.) tels qu'utilisés dans la présente description correspondent à tout outil qui fonctionne et est opéré au moyen d'un ordinateur, pour fournir ou exécuter une ou plusieurs fonction(s) ou tâche(s) pour un utilisateur ou un autre programme applicatif. Pour interagir avec un programme applicatif, et le contrôler, une interface utilisateur peut être fournie sur l'équipement sur lequel le programme applicatif est mis en œuvre. Par exemple, une interface graphique (en anglais, «graphical user interface» ou GUI) peut être générée et affichée sur un écran de l'équipement utilisateur, ou une interface utilisateur audio peut être restituée à l'utilisateur en utilisant un haut-parleur, un casque ou une sortie audio.

Les termes « contenu multimédia » tel qu'utilisés dans la présente description correspondent à tout contenu de type audio et/ou vidéo ou audiovisuel.

Dans la présente description, les termes distribution « en temps-réel », distribution « en mode linéaire », distribution « en mode TV linéaire », distribution « en mode dynamique » et distribution « live » ou « en mode live » sont utilisés de manière interchangeable pour désigner la distribution en mode ou de type dynamique (en anglais mode « live » ou « dynamic ») d'un contenu multimédia dans un système de distribution de contenus vers des terminaux, comprenant notamment la distribution du contenu à mesure que celui-ci est généré, par opposition à la distribution d'un contenu précédemment généré, sur requête d'accès d'un utilisateur (distribution sur requête d'accès ou distribution en mode ou de type « statique » - en anglais, « static »), tel que, par exemple, un contenu enregistré sur un serveur, et rendu disponible à des utilisateurs par un service de vidéo à la demande (VOD).

Dans la présente description, les termes « contenu live » font référence à un contenu, par exemple de type multimédia, distribué, par exemple selon un mode de distribution OTT, en mode dynamique (par opposition au mode statique de distribution). Un contenu live sera typiquement généré par une chaîne de télévision, ou par tout type de média télévisuel, et pourra être par ailleurs distribué sur un réseau de diffusion de contenus multimédia, outre sa mise à disposition sur des serveurs de contenus dans un système de distribution OTT.

Dans la présente description, les termes « terminal », « équipement utilisateur », « lecteur », « dispositif de lecture », « terminal de lecture » et « lecteur vidéo » sont utilisés de manière interchangeable pour désigner tout type de dispositif, mis en œuvre par un ou plusieurs logiciels, un ou plusieurs matériels, ou une combinaison d'un ou plusieurs logiciels et d'un ou plusieurs matériels, configuré pour utiliser un contenu multimédia distribué selon un protocole de distribution, par exemple un protocole de distribution multi-écrans, notamment en chargement et en lecture du contenu. Les termes « client » et « client de lecture vidéo » sont aussi utilisés de manière interchangeable pour désigner tout type de dispositif, logiciel et/ou matériel, ou toute fonction ou ensemble de fonctions, mise(s) en œuvre par logiciel et/ou matériel au sein d'un dispositif, configurés pour utiliser un contenu multimédia distribué selon un protocole de distribution, par exemple un protocole de distribution multi-écrans, notamment en chargement du contenu depuis un serveur et en lecture du contenu.

Dans la présente description, le terme « durée » pour une image d'une séquence ou d'un flux vidéo pourra désigner la durée correspondant à une image pour la fréquence d'images (aussi appelée fréquence de trames, ou « frame rate » en anglais) de la séquence vidéo. Par exemple, la durée d'une image d'un flux vidéo de fréquence d'images égale à 25 images par seconde sera égale à 1/25 seconde, soit 40 ms, et la durée d'une image d'un flux vidéo de fréquence d'images égale à 30 images par seconde sera égale à 1/30 seconde, soit environ 33,3 ms. La taille d'un segment correspondant à un sous-ensemble d'images de l'ensemble d'images d'un flux vidéo, exprimée en nombre d'images, pourra être transposée en une durée, égale à la durée d'une image multipliée par le nombre d'images.

Les données vidéo font en général l'objet d'un codage source visant à les compresser afin de limiter les ressources nécessaires à leur transmission et/ou à leur stockage. Il existe de nombreux standards de codage, tels que H.264/AVC, H.265/HEVC et MPEG-2, qui peuvent être utilisés à cette fin.

On considère un flux vidéo comprenant un ensemble d'images. Dans les schémas de codage classique, les images du flux vidéo à encoder sont typiquement considérées selon une séquence d'encodage, et chacune est divisée en ensembles de pixels eux aussi traités séquentiellement, par exemple en commençant en haut à gauche et en finissant en bas à droite de chaque image.

L'encodage d'une image du flux est ainsi effectué en divisant une matrice de pixels correspondant à l'image en plusieurs ensembles, par exemple des blocs de taille fixe 16 x 16, 32 x 32 ou 64 x 64, et en encodant ces blocs de pixels selon une séquence de traitement donnée. Certains standards, comme le H.264/AVC, prévoient la possibilité de décomposer des blocs de taille 16 x 16 (appelés alors macro-blocs) en sous-blocs, par exemple de taille 8 x 8 ou 4 x 4, afin d'effectuer les traitements d'encodage avec une granularité plus fine. Le traitement d'un bloc (ou ensemble) de pixels comprend typiquement une prédiction des pixels du bloc, qui peut être effectuée à l'aide de pixels causaux (précédemment codés) présents dans l'image en cours d'encodage (dite « image courante »), auquel cas on parle de prédiction par corrélation spatiale, ou prédiction « intra », et/ou à l'aide de pixels issus d'images précédemment codées, auquel cas on parle de prédiction par corrélation temporelle, ou prédiction « inter ».

Cette exploitation des redondances spatiales et temporelles permet d'éviter de transmettre ou de stocker la valeur des pixels de chaque bloc (ou ensemble) de pixels, en représentant certains au moins des blocs par un résiduel de pixels représentant la différence (ou la distance) entre les valeurs de prédiction des pixels du bloc et les valeurs réelles des pixels du bloc prédit. L'information des résiduels de pixels est présente dans les données générées par l'encodeur après transformée (par exemple, de type DCT) et quantification afin de réduire l'entropie des données générées par l'encodeur.

Une image d'un flux vidéo en cours de traitement est ainsi typiquement divisée en blocs dont la forme et la taille sont déterminées en fonction notamment de la taille de la matrice de pixels représentant l'image, par exemple en blocs de forme carrée de 16 x 16 pixels. On forme ainsi un ensemble de blocs pour lequel on définit une séquence de traitement (aussi appelé « parcours de traitement »). On peut par exemple traiter les blocs de l'image courante en commençant par celui situé en haut à gauche de l'image, suivi de celui immédiatement à droite du précédent, jusqu'à arriver à la fin de la première ligne de blocs pour passer au bloc le plus à gauche dans la ligne immédiatement en-dessous, pour terminer le traitement par le bloc le plus en bas et à droite de l'image.

On considère ainsi un « bloc courant », c'est-à-dire un bloc en cours de traitement dans l'image courante. Le traitement du bloc courant peut comprendre le partitionnement du bloc en sous-blocs, afin de traiter le bloc avec une granularité spatiale plus fine que celle obtenue avec le bloc. Le traitement d'un bloc comprend par ailleurs la sélection d'un mode de prédiction du bloc, qui peut être de type intra ou inter comme expliqué ci-dessus.

Ainsi, une séquence vidéo comprenant un ensemble d'images pourra être découpée en segments (en anglais « chunks ») consécutifs, chaque segment correspondant à un sous-ensemble de l'ensemble d'images, notamment lorsque la séquence vidéo est distribuée sous forme encodée en mode dynamique (« live ») ou en mode statique (par exemple en mode de distribution sur demande de l'utilisateur). Les segments de la séquence pourront être encodés séquentiellement, par exemple au fur et à mesure de leur distribution.

Chaque segment transmis, par exemple lors d'un streaming vidéo, représente ainsi une partie encodée de la séquence vidéo ou du flux vidéo initial pour une qualité donnée, et est décodable indépendamment des autres segments de la séquence vidéo. La phase d'encodage des segments avant transmission vise à compresser les données de la séquence vidéo afin de limiter les ressources nécessaires à sa transmission et/ou son stockage. Cette phase d'encodage permet également d'obtenir plusieurs profils de qualité / résolution inférieure et supérieure d'une même séquence vidéo. Ces profils de la séquence vidéo sont ensuite transmis via les segments, et permettent d'adapter la qualité de la séquence vidéo aux contraintes du client (débit, ressources matérielles de l'appareil de visionnage, etc.).

L'utilisation de segments permet notamment de commencer la lecture d'une séquence vidéo dont le téléchargement n'est pas terminé, mais aussi de basculer sur un profil différent présentant une qualité inférieure ou supérieure, suivant les fluctuations de bande passante expérimentées par le client lors de la réception du flux vidéo. Un exemple de l'adaptation de la qualité vidéo en fonction du débit disponible est présenté figure 1. La plupart des protocoles de transport de flux vidéo, tel que le HLS (Http Live Streaming) ou le DASH (Dynamic Adaptive Streaming over Http), utilisent ce principe de découpage en segments.

La figure 1 montre un exemple de découpage en segments (chunks) pour produire trois séquences de segments correspondants respectivement à trois profils relatifs à des niveaux de qualité différents : Qualité A, Qualité B et Qualité C. La transmission des segments est effectuée en sélectionnant un profil de qualité en fonction du débit disponible pour la transmission : trois segments du profil de qualité Qualité B sont d'abord transmis au regard du débit disponible, suivis de deux segments du profil de qualité Qualité A, puis de quatre segments du profil de qualité Qualité C, et à nouveau trois segments du profil de qualité Qualité B.

Dans un ou plusieurs modes de réalisation, il peut être prévu d'encoder les segments suivant un standard de codage vidéo, tels que H.264/AVC, H265/HEVC ou encore MPEG-2. Comme expliqué ci-dessus, les images d'une séquence vidéo à encoder sont considérées séquentiellement et divisées en blocs de pixels traités séquentiellement, par exemple en commençant en haut à gauche et en finissant en bas à droite. Ces blocs de pixels sont prédits en exploitant la corrélation qui existe entre les pixels, corrélation qui peut être soit spatiale (dans la même image) ou temporelle (dans les images précédemment codées). Cette prédiction permet de calculer un résiduel de pixels le plus faible possible qui est alors transmis au décodeur après transformée et quantification, afin de limiter la taille du flux binaire en sortie de l'encodeur.

On peut distinguer différents modes de prédiction, selon qu'ils utilisent une prédiction par corrélation spatiale et/ou temporelle :
Dans le mode dit « intra », un bloc de pixels d'une image courante est prédit à partir des pixels voisins précédemment codés présents dans l'image courante. Il existe plusieurs directions de prédiction possibles selon l'encodeur utilisé pour prédire un bloc en intra. L'encodeur génère en sortie des informations relatives au résiduel de pixels et à la direction intra correspondante, qui sont fournies au décodeur.

Dans le mode dit « inter », un bloc de pixels d'une image courante est prédit à l'aide de pixels issus d'une ou plusieurs images (autres que l'image courante) précédemment codées. Le bloc peut être prédit à partir d'une seule ou de deux images. On peut donc utiliser soit un seul vecteur de mouvement (appelé vecteur L0) ou bien deux vecteurs de mouvement (appelés vecteurs L0 et L1) qui pointent vers des images potentiellement différentes, pour prédire un bloc en inter. On transmet au décodeur à la fois le résiduel de pixels et des informations concernant le ou les vecteurs de mouvement.

Dans le mode dit « skip », comme dans le cas du mode inter, un bloc de pixels est prédit à l'aide de pixels issus d'images précédemment codées (une ou deux images L0 et L1). La première différence est que pour le mode Skip, on transmet seulement les informations sur les vecteurs, le résiduel de pixels étant nul. Ce qui veut dire que le bloc choisi dans une autre image va être exactement copié pour obtenir le bloc courant. La seconde différence est que les vecteurs utilisés pour ce mode sont déduits par le décodeur parmi une liste de vecteurs possibles dits vecteurs prédicteurs, ce qui permet de transmettre seulement la position du prédicteur dans un dictionnaire au lieu de transmettre sa valeur.

Les schémas de compression vidéo utilisent usuellement la notion de groupe d'images (en anglais, « Group Of Pictures », ou « GOP »), pour définir un ordre dans lequel sont disposées les images d'un segment vidéo. Un GOP est typiquement répété périodiquement jusqu'à la fin de l'encodage. Il est constitué de différents types d'images :
Des images de type I (Intra) : ce type d'image utilise uniquement le mode de prédiction intra. Il caractérise donc une image indépendante des autres images, en ce qu'elle se suffit à elle-même pour être décodée.

Des images de type P (Prédictif) : Ce type d'image utilise les 3 modes de prédiction intra, inter, et skip. La prédiction par corrélation temporelle s'effectue en utilisant uniquement des images passées qui ont été encodées.

Des images de type B (Bidirectionnelle) : Ce type de prédiction utilise également les 3 modes de prédiction intra, inter, et skip, mais la prédiction par corrélation temporelle peut utiliser des images passées et/ou des images futures, pour autant qu'il s'agisse d'images précédemment encodées.

Il existe deux types de GOP, les GOP fermés qui sont décodables indépendamment, et les GOP ouverts, plus efficace en terme de compression, mais dont certaines images ne peuvent être décodées sans le GOP suivant.

Un GOP fixe est un GOP dont l'ordre est constant toutes les N images, N étant un nombre prédéterminé.

L'utilisation d'un découpage en segments (chunking) impose à l'encodeur vidéo de commencer les segments par une image intra. Autrement dit, le découpage en segment est configuré de manière à ce que chaque segment déterminé commence par une image de type intra. Cependant, comme illustré sur la figure 2, les images intra coûtent cher en termes de débit d'encodage, de sorte qu'un nombre important d'images intra diminue l'efficacité de codage d'un segment vidéo.

La figure 2 illustre le nombre de bits nécessaire à l'encodage d'images d'un segment vidéo, en fonction du mode d'encodage utilisé pour chaque image. La première image de l'ensemble de cinquante images illustré sur la figure, étant de type I (intra), génère un flux binaire en sortie de l'encodeur presque deux fois plus important que les images 17, 33 et 49, qui sont des images de type P. Les images de type B génèrent en comparaison un flux binaire beaucoup moins important.

En outre, lors d'un changement de scène dans un GOP, un encodeur vidéo utilisera une image intra lors de la première image de la scène, car la prédiction temporelle n'est pas efficace, ce qui augmente encore le nombre d'image intra du segment.

Le procédé proposé traite ces différents inconvénients en introduisant, dans un ou plusieurs modes de réalisation, une méthode de découpage en segments dynamique utilisant un schéma de décision de positionnement des images intra constituant les débuts de segments permettant d'améliorer l'encodage vidéo (et notamment son efficacité en termes de débit d'encodage).

La figure 3a illustre le procédé proposé selon un ou plusieurs modes de réalisation. Ce procédé peut être mis en œuvre par tout dispositif comprenant un processeur et une mémoire, et configuré pour sa mise en œuvre, tel que par exemple, un encodeur vidéo, ou tout équipement configuré pour l'encodage d'une séquence vidéo correspondant à un contenu multimédia, pour être par exemple distribué selon un protocole de distribution multi-écrans.

En référence à la figure 3a, dans un ou plusieurs modes de réalisation, le dispositif configuré pour la mise en œuvre du procédé peut être configuré pour obtenir 11 une information indiquant, dans un ensemble d'images d'une séquence vidéo 10, au moins une image 12 à encoder selon un mode de codage de type à prédiction par corrélation spatiale.

Le dispositif peut en outre être configuré pour déterminer 13 dans l'ensemble d'images de la séquence vidéo 10 des sous-ensembles d'images (segments ou « chunks ») 14 consécutifs, les tailles respectives de certains au moins des sous-ensembles d'images étant fonctions de l'au moins une image 12 à encoder selon le mode de codage de type à prédiction par corrélation spatiale.

Ainsi, dans un ou plusieurs modes de réalisation, les segments pourront être déterminés pour une séquence vidéo à partir d'une ou plusieurs images de la séquence qui auront été précédemment identifiées comme des images « intra », c'est-à-dire des images à encoder selon un mode de codage de type à prédiction par corrélation spatiale, de sorte que la taille d'un segment (exprimée en termes de nombre d'images ou, de manière correspondante, comme une durée) pourra varier d'un segment à un autre, au contraire des procédés de segmentation qui s'imposent une taille fixe de segments.

Par exemple, dans un ou plusieurs modes de réalisation, les sous-ensembles d'images consécutifs pourront être déterminés de telle sorte que leurs tailles respectives soient déterminées par les positions respectives dans la séquence vidéo d'images « intra ».

De manière avantageuse, le dispositif pourra être configuré pour encoder la séquence vidéo 15 sur la base des sous-ensembles d'images consécutifs 14 déterminés.

Ainsi, dans un ou plusieurs modes de réalisation, il est proposé un procédé de découpage en segments dynamique utilisant des durées (ou, de manière correspondante, des tailles) de segments variables permettant d'améliorer l'encodage vidéo et ainsi diminuer le débit des segments encodés pour une qualité d'encodage donnée, en tirant parti d'informations obtenues ou déterminées concernant des images de la séquence vidéo identifiées comme devant être encodées selon un mode de codage de type à prédiction par corrélation spatiale, et ce indépendamment du protocole de transport choisi pour distribuer les segments encodés.

La figure 3b illustre un exemple d'architecture réseau permettant la distribution de données vidéo, et comportant un dispositif 101 configuré pour la mise en œuvre du procédé proposé selon un ou plusieurs modes de réalisation.

En référence à la figure 3b, trois séquences vidéos comportant chacune un ensemble d'images correspondant à trois profils QA ; QB ; QC de qualités différentes d'une séquence vidéo d'entrée SEQ_video_IN sont fournies à l'encodeur ENCOD 101. Ces trois profils peuvent différer par la résolution des images de la séquence vidéo correspondante, qui peut être différente d'un profil à l'autre. Par exemple, le profil QA peut correspondre à une séquence vidéo de résolution 2160p (3840x2160 pixels), le profil QB à une séquence vidéo de résolution 1080p (1920x1080 pixels), et le profil QC à une séquence vidéo de résolution 720p (1280x720 pixels). Dans les cas où la séquence vidéo correspond à un flux vidéo distribué sur un réseau de diffusion en mode dynamique, un délai dans la diffusion des profils peut être appliqué afin de donner suffisamment de temps à l'encodeur pour l'encodage des segments selon les différents profils. Ce délai peut être par exemple de l'ordre de quelque secondes à quelques dizaines de secondes. Ce délai peut typiquement être mis à profit pour analyser l'ensemble d'images d'une séquence vidéo d'un flux vidéo en cours de distribution, pour y déterminer les images à encoder selon un mode de codage intra, par exemple parce qu'elles correspondent à un changement de scène ou à une requête de création de segment reçue.

Dans le mode de réalisation illustré sur la figure 3b, le dispositif 101 comprend un module d'analyse MOD_ANALY 102 configuré pour analyser les images d'un ou plusieurs des profils QA ; QB ; QC sur la base de la séquence d'entrée SEQ_VIDEO IN, afin de déterminer un ou plusieurs changements de scène pour l'ensemble des profils analysés. En fonction des données d'analyse générées par le module d'analyse MOD_ANALY 102, les profils sont chacun encodés selon des sous-ensembles d'images (segments) de tailles variables, 103, 104, et 105. En fonction du mode de réalisation choisi, la taille de chaque sous-ensemble d'images pourra être fonction des changements de scènes déterminés et/ou de paramètres externes fournis à l'encodeur 101 par un utilisateur 110. Les trois profils 103, 104 et 105 de la séquence vidéo de qualités/résolutions différentes peuvent permettre de s'adapter aux ressources matérielles du client de lecture, comme par exemple la bande passante disponible ou des caractéristiques du dispositif de visionnage (taille d'écran, résolution, etc.).

Dans un ou plusieurs modes de réalisation, le schéma de segmentation (découpage en segments) d'une séquence vidéo correspondant à un profil pourra être configuré de manière à ce que la position de la première image (de type intra) de chaque segment de la séquence vidéo corresponde aux positions respectives des premières images de ce même segment dans des séquences vidéo correspondant à d'autres profils. Par exemple, en référence à la figure 3b, la première image du segment SEG1 du profil 103 peut être choisie en correspondance avec la première image du segment SEG1 du profil 104, ainsi qu'avec celle du profil 105. De cette manière, le changement de profil suite à une variation de bande passante peut avantageusement demeurer transparent pour l'utilisateur en cours de visionnage de la séquence vidéo.

Après encodage par l'encodeur ENCOD 101, les segments des différents profils sont transmis au dispositif 106 pour être stockés dans une ou plusieurs mémoires de serveurs. Les segments peuvent ensuite être transmis par un dispositif de transmission 107 sur requête d'un ou plusieurs clients (HD, Full HD, UHD) souhaitant accéder à un contenu multimédia.

Les figures 4a et 4b illustrent des exemples de mise en œuvre du procédé proposé selon un ou plusieurs modes de réalisation.

En référence aux figures 3b et 4a, afin de pouvoir définir le début et la taille (ou, de manière correspondante, l'image de début et l'image de fin) de chaque segment, un dispositif (par exemple l'encodeur ENCOD 101) configuré pour la mise en œuvre d'un mode de réalisation du procédé proposé peut être configuré pour déterminer, par exemple par l'intermédiaire d'un module d'analyse MOD_ANALY 102, des paramètres associés à des images d'un ensemble d'images d'une séquence vidéo d'entrée (par exemple la séquence vidéo SEQ_video_IN), afin de sélectionner dans l'ensemble d'images au moins une image candidate pour définir le début d'un segment. Dans un ou plusieurs modes de réalisation, l'ensemble d'images de la séquence vidéo d'entrée pourra être analysé pour y déterminer au moins une image à encoder selon un mode de codage de type à prédiction par corrélation spatiale, par exemple pour y déterminer une ou plusieurs images à encoder selon un mode de codage intra. Dans un ou plusieurs modes de réalisation dans lesquels l'encodeur est configuré pour encoder selon un mode de codage de type à prédiction par corrélation spatiale les images correspondant à un changement de scène dans la séquence vidéo d'entrée et/ou les images pour lesquelles un ordre de création de segment a été reçu, l'ensemble d'images de la séquence vidéo d'entrée pourra être analysé pour y déterminer des paramètres relatifs aux contenus respectifs des images pour sélectionner la ou les image(s) correspondant à un changement de scène et/ou pour y déterminer des paramètres relatifs au contrôle de l'encodage des images pour sélectionner la ou les image(s) pour lesquelles un ordre externe a été reçu. Dans un ou plusieurs modes de réalisation, l'ensemble d'images de la séquence vidéo d'entrée pourra être analysé pour y déterminer des paramètres relatifs à l'encodage des images pour sélectionner une ou plusieurs images à encoder selon un mode de codage de type à prédiction par corrélation spatiale (par exemple un mode de codage de type intra). En fonction du mode de réalisation choisi, le module d'analyse sera configuré pour traiter la séquence vidéo d'entrée (SEQ_video_IN), ou chacune des séquences vidéo correspondant aux différents profils de qualité utilisés (QA, QB, QC).

Dans un ou plusieurs modes de réalisation, l'encodeur pourra comprendre un module d'analyse configuré pour déterminer un ou plusieurs changements de scène dans l'ensemble d'images de la séquence vidéo d'entrée. De plus, des ordres externes signalant à l'encodeur le début d'un nouveau segment pourront être intégrés (par ex. par l'utilisateur) dans la séquence vidéo d'entrée, de sorte que l'analyse de la séquence vidéo d'entrée pourra en outre comprendre l'identification des ordres externes comprenant une ou plusieurs requêtes de création de segment.

Une ou plusieurs, voire, en fonction du mode de réalisation choisi, chaque détermination de changement de scène ou d'ordre externe pourra être prise en compte par une décision d'encodage de l'image correspondante selon un mode de codage de type à prédiction par corrélation spatiale. L'encodage de cette image selon le mode de codage de type à prédiction par corrélation spatiale pourra être configuré pour que cette image soit de type intra. Ainsi, dans les modes de réalisation dans lesquels l'encodeur est configuré pour encoder les images correspondant à un changement de scène selon un mode de codage de type à prédiction par corrélation spatiale (par exemple selon un mode intra), une analyse de la séquence vidéo d'entrée pour déterminer une ou plusieurs images à encoder selon un mode de codage de type à prédiction par corrélation spatiale pourra comprendre une analyse pour déterminer dans un ensemble d'images de la séquence une ou plusieurs images correspondant à un changement de scène. De même, dans les modes de réalisation dans lesquels l'encodeur est configuré pour prendre en compte les ordres externes de création de segment, l'encodeur pourra être en outre configuré pour encoder les images pour lesquelles un ordre externe de création de segment a été reçu selon un mode de codage de type à prédiction par corrélation spatiale (par exemple selon un mode intra). L'analyse de la séquence vidéo d'entrée pour déterminer une pluralité d'images à encoder selon un mode de codage de type à prédiction par corrélation spatiale pourra alors en outre comprendre une analyse pour sélectionner dans l'ensemble d'images de la séquence une ou plusieurs images pour lesquelles un ordre externe de création de segment aura été reçu.

En référence à la figure 4a, un dispositif d'encodage, comprenant un processeur couplé de manière opérationnelle à une mémoire, pourra être configuré pour analyser une séquence vidéo d'entrée, l'analyse comprenant une analyse des images d'un ensemble d'images de la séquence d'entrée pour déterminer les images à encoder selon un mode de codage de type à prédiction par corrélation spatiale (par exemple un mode de codage de type intra), et générant une séquence d'images à encoder selon un mode de codage de type à prédiction par corrélation spatiale (*I_Intraₖ*)*ₖ*, appelée séquence d'images candidates, la séquence étant ordonnée, par exemple sur la base du rang (ou de la position) dans la séquence vidéo d'entrée des images la composant. Dans les modes de réalisation dans lesquels l'encodeur est configuré pour encoder les images correspondant à un changement de scène et/ou pour lesquelles un ordre de création de segment a été reçu selon un mode de codage de type à prédiction par corrélation spatiale (par exemple selon un mode intra), l'analyse des images de l'ensemble d'images de la séquence d'entrée pour déterminer les images à encoder selon un mode de codage de type à prédiction par corrélation spatiale pourra comprendre une détermination des images correspondant à un changement de scène et/ou une sélection des images pour lesquelles un ordre a été reçu, respectivement.

Dans un ou plusieurs modes de réalisation, deux séquences d'images pourront être générées par l'encodeur : une première séquence d'images correspondant à un changement de scène (par exemple (I_SCₙ)n=1,...,N_{SC} dans le cas où N_{SC} images correspondant à un changement de scène auront été déterminées dans l'ensemble d'images de la séquence vidéo d'entrée), et une deuxième séquence d'images pour lesquelles un ordre de création de segment a été reçu (par exemple (I_OEₘ)m=1,...,N_{OE} dans le cas où N_{OE} images pour lesquelles un ordre de création de segment a été reçu auront été déterminées dans l'ensemble d'images de la séquence vidéo d'entrée). Ces deux séquences d'images peuvent être utilisées pour générer une séquence d'images candidates (*I_Intraₖ*)*ₖ* comprenant des images à encoder selon un mode de codage de type à prédiction par corrélation spatiale.

En référence à la figure 4a, lors de la segmentation de la séquence vidéo d'entrée, la définition d'un nouveau segment SEGⱼ d'une séquence de segments à définir (SEGⱼ)j, par exemple de manière itérative (selon une boucle d'indice j comme illustré sur la figure), pourra comprendre la détermination (200a) de la première image de ce segment, définie comme étant l'image de début du segment Id_SEGj, dans la séquence d'images candidates (*I_Intraₖ*)*ₖ*. Ainsi, dans un ou plusieurs modes de réalisation, l'une des images de la séquence d'images candidate (*I_Intraₖ*)*ₖ* pourra être choisie comme image de début du segment en cours de définition SEGj.

Par exemple, dans le cas d'un ordre externe paramétré par l'utilisateur dans la séquence vidéo d'entrée, la première image du segment nouvellement défini pourra être une image de type intra I_OEn correspondant à cet ordre externe (par exemple identifiée dans l'ordre externe).

Dans un ou plusieurs modes de réalisation, la taille du segment T_seg peut en outre être initialisée (200b) à une valeur de taille prédéterminée (par exemple zéro ou un), afin d'être utilisée comme paramètre d'indice de boucle de parcours de la séquence vidéo. Comme discuté ci-dessus, la taille du segment T_seg pourra être exprimée en un nombre d'images ou, de manière préférée, en une durée.

Dans un ou plusieurs modes de réalisation, les images de la séquence vidéo d'entrée qui suivent la première image du segment en cours de définition Id_SEGj peuvent être ensuite parcourues, par exemple par itérations successives d'une boucle de parcours des images de la séquence vidéo d'entrée, une ou plusieurs images de la séquence étant analysées lors de chaque itération de la boucle de parcours, afin de parcourir l'ensemble d'images de la séquence vidéo d'entrée pour y détecter la prochaine image candidate, c'est-à-dire une image de la séquence d'images candidates (*I_Intraₖ*)*ₖ* positionnée dans la séquence vidéo d'entrée après l'image de début de segment en cours de définition (Id_SEGj), et suivant immédiatement dans la séquence d'images candidates (*I_Intraₖ*)*ₖ* l'image de début de segment en cours de définition (Id_SEGj). Par exemple, cette prochaine image peut correspondre à la première image de type intra rencontrée en parcourant la séquence vidéo d'entrée à partir de l'image de début de segment en cours de définition (Id_SEGj). Le parcours de la séquence vidéo à partir de l'image Id_SEGj selon une boucle itérative pourra par exemple être effectué en incrémentant (201) la taille (par exemple exprimée en durée ou en nombres d'images) du segment T_seg d'un incrément ΔT.

Dans les modes de réalisation dans lesquels la taille d'un segment est mesurée en déterminant une durée correspondante, l'incrément ΔT peut correspondre à l'avancée en temps d'un module d'analyse/identification dans l'ensemble d'images de la séquence vidéo d'entrée. De manière avantageuse, il pourra être choisi, dans un ou plusieurs modes de réalisation, d'incrémenter le compteur de boucle de parcours de la séquence vidéo (dans l'exemple illustré sur la figure 4a, le compteur T_seg) d'une valeur correspondant à la durée d'une image (obtenue par exemple en fonction d'une fréquence d'images), de manière à adapter ce pas d'incrémentation lors d'un changement de fréquence d'images pour le flux vidéo de manière dynamique.

Lors de chaque itération de la boucle d'analyse, après chaque incrémentation (201) de la taille du segment T_seg, une vérification est effectuée (202) afin de déterminer si l'image atteinte lors du parcours de la séquence vidéo à partir de l'image Id_SEGj correspond à une image candidate (une image identifiée comme devant être encodée selon un mode de codage de type à prédiction par corrélation spatiale) appartenant à la séquence d'images candidates (*I_Intraₖ*)*ₖ*, par exemple à une image de la première séquence (I_SCn+1) ou à une image de la deuxième séquence (I_OEm+1). Lorsque l'image (I_Intrak+1) atteinte par le parcours de la séquence vidéo est identifiée (202a) comme appartenant à la séquence d'images candidates (*I_Intraₖ*)*ₖ*, le segment en cours de définition (SEGj) est défini (203), sur la base de son image de début (Id_SEGj), et d'une image de fin (If_SEGj) déterminée sur la base de l'image (I_Intrak+1), par exemple d'une image de fin (If_SEGj) déterminée comme précédant immédiatement dans la séquence vidéo d'entrée l'image (I_Intrak+1). Une fois la définition d'un segment effectuée (SEGj dans l'exemple), une nouvelle itération de la boucle de segmentation peut être mise en œuvre, par exemple en répétant le schéma décrit ci-dessus pour la définition du segment précédemment en cours de définition (SEGj) après incrémentation (204) de l'indice j de boucle de segmentation. Dans un ou plusieurs modes de réalisation, lorsque la définition d'un segment SEGj pour une itération j de la boucle de segmentation utilise une image candidate (I_Intrak+1) de la séquence d'images candidates (*I_Intraₖ*)*ₖ* identifiée lors de l'itération j, la première image (Id_SEGj+1) du segment (SEGj+1) consécutif au segment en cours de définition (SEGj) est déterminée (205a) en fonction de cette image candidate (I_Intrak+1) (par exemple comme étant cette image candidate : Id_SEGj+1 = I_Intrak+1), pour la mise en œuvre de l'itération suivante (j+1) de la boucle de segmentation.

Lorsque l'image atteinte par le parcours de la séquence vidéo n'est pas identifiée (202b) comme appartenant à la séquence d'images candidates (*I_Intraₖ*)*ₖ*, le parcours de la séquence vidéo d'entrée depuis l'image de début de segment Id_SEGj se poursuit, par exemple en incrémentant (201) le paramètre de taille du segment (T_seg) comme illustré sur la figure pour tester une nouvelle image de la séquence vidéo d'entrée dans le cadre d'une nouvelle itération de la boucle de parcours de la vidéo d'entrée.

En variante, ou en complément, dans un ou plusieurs modes de réalisation, comme décrit ci-dessus, les images déterminées dans l'ensemble d'images de la séquence vidéo d'entrée comme devant être encodées selon un mode de codage de type à prédiction par corrélation spatiale, par exemple les images déterminées dans l'ensemble d'images de la séquence vidéo d'entrée comme devant être encodées selon un mode de codage intra, peuvent être organisées, selon leurs rangs respectifs (ou positions respectives) dans la séquence vidéo en une séquence ordonnée d'images à encoder selon un mode de codage de type à prédiction par corrélation spatiale. Cette séquence ordonnée d'images à encoder selon un mode de codage de type à prédiction par corrélation spatiale peut ensuite être parcourue pour définir les segments de la séquence vidéo d'entrée, en fonction du mode de réalisation du schéma de segmentation choisi.

Ainsi, en fonction du mode de réalisation choisi, la séquence vidéo d'entrée pourra être segmentée en définissant un ou plusieurs segments par détermination, pour un segment en cours de définition, d'une image de début de segment SEGj en cours de définition et d'une image de début du segment SEGj+1 suivant le segment SEGj en cours de définition (segment consécutif au segment en cours de définition), par analyse des images de la séquence à partir de l'image de début de segment en cours de définition, et/ou par analyse d'une séquence ordonnée d'images à encoder selon un mode de codage de type à prédiction par corrélation spatiale, l'image de début du segment suivant correspondant à l'image à encoder selon un mode de codage de type à prédiction par corrélation spatiale suivant immédiatement, dans la séquence ordonnée d'images à encoder selon un mode de codage de type à prédiction par corrélation spatiale, l'image de début de segment en cours de définition.

La figure 4b illustre un mode de réalisation du procédé proposé correspondant au schéma illustré sur la figure 4a, dans lequel une contrainte Ci à respecter pour définir le segment en cours de définition, comme par exemple une contrainte sur la taille du segment en cours de définition, est prise en compte. Bien entendu, le procédé proposé n'est pas limité à une contrainte particulière, à un type particulier de contraintes, ou à un nombre de contraintes à respecter pour définir un ou plusieurs segments lors de la segmentation.

Comme illustré sur la figure 4a, la définition d'un segment (SEGj) peut être initialisée, dans un ou plusieurs modes de réalisation, par la détermination (200a) d'une image de début de ce segment (Id_SEGj). Selon le mode de réalisation, cette image de début du segment en cours de définition peut être choisie, en fonction du cas de figure, parmi une séquence d'images candidates correspondant à une séquence ordonnée d'une ou plusieurs images identifiées comme devant être encodées selon un mode de codage de type à prédiction par corrélation spatiale, ou en fonction d'un autre critère prévu par le mode de réalisation. Par exemple, comme décrit plus en détails ci-dessous, dans un ou plusieurs modes de réalisation, la prise en compte d'un critère de taille maximale pour la définition d'un segment peut conduire à sélectionner l'image de début du segment suivant, sur la base de laquelle l'image de fin du segment en cours de définition peut être déterminée, parmi les images de la séquence vidéo d'entrée ne faisant pas partie de la séquence d'images candidates, c'est-à-dire de la séquence d'images identifiées comme devant être encodées selon un mode de codage de type à prédiction par corrélation spatiale.

En référence à la figure 4b, dans un ou plusieurs modes de réalisation, la taille du segment T_seg peut en outre être initialisée (200b) à une valeur de taille prédéterminée (par exemple zéro ou un), afin d'être utilisée comme paramètre d'indice de boucle de parcours de la séquence vidéo.

Dans un ou plusieurs modes de réalisation, les images de la séquence vidéo d'entrée qui suivent l'image de début du segment en cours de définition (Id_SEGj) peuvent être ensuite parcourues, par exemple par itérations successives d'une boucle de parcours des images de la séquence vidéo d'entrée, afin de parcourir l'ensemble d'images de la séquence vidéo d'entrée pour y détecter la prochaine image candidate, c'est-à-dire une image de la séquence d'images candidates (*I_Intraₖ*)*ₖ* positionnée dans la séquence vidéo d'entrée après l'image de début de segment en cours de définition (Id_SEGj), et suivant immédiatement dans la séquence d'images candidates (*I_Intraₖ*)*ₖ* l'image de début de segment en cours de définition (Id_SEGj). Le parcours de la séquence vidéo à partir de l'image Id_SEGj selon une boucle itérative pourra par exemple être effectué en incrémentant (201) la taille (par exemple exprimée en durée, en nombres d'images) du segment T_seg d'un incrément ΔT. Comme indiqué ci-dessus, il pourra être préféré d'incrémenter un compteur d'une durée correspondant à une image de la séquence vidéo, en lien avec la fréquence d'images courante de la séquence.

Dans les modes de réalisation dans lesquels la taille d'un segment est mesurée en déterminant une durée correspondante, l'incrément ΔT peut ainsi correspondre à l'avancée en temps d'un module d'analyse/identification dans l'ensemble d'images de la séquence vidéo d'entrée. Lors de chaque itération de la boucle d'analyse, après chaque incrémentation (201) de la taille du segment T_seg, une vérification est effectuée (202) afin de déterminer si l'image atteinte lors du parcours de la séquence vidéo à partir de l'image Id_SEGj correspond à une image candidate (une image identifiée comme devant être encodée selon un mode de codage de type à prédiction par corrélation spatiale) appartenant à la séquence d'images candidates (*I_Intraₖ*)*ₖ*. Lorsque l'image atteinte par le parcours de la séquence vidéo n'est pas identifiée (202b) comme appartenant à la séquence d'images candidates (*I_Intraₖ*)*ₖ*, le parcours de la séquence vidéo d'entrée se poursuit, par exemple en incrémentant (201) le paramètre de taille du segment (T_seg) comme illustré sur la figure pour tester une nouvelle image de la séquence vidéo d'entrée dans le cadre d'une nouvelle itération de la boucle de parcours de la vidéo d'entrée.

Lorsque l'image (I_Intrak+i) atteinte par le parcours de la séquence vidéo est identifiée (202a) comme appartenant à la séquence d'images candidates (*I_Intraₖ*)*ₖ*, la contrainte Ci est prise en compte pour l'image identifiée (I_Intrak+i), en vérifiant (206) si cette image (I_Intrak+i) satisfait ou non la contrainte Ci.

Lorsqu'il est déterminé (206a) que l'image identifiée (I_Intrak+i) satisfait la contrainte Ci, le segment en cours de définition (SEGj) est défini (203), sur la base de son image de début (Id_SEGj), et d'une image de fin (If_SEGj) déterminée sur la base de l'image candidate (I_Intrak+i), par exemple d'une image de fin (If_SEGj) déterminée comme précédant immédiatement dans la séquence vidéo d'entrée l'image candidate (I_Intrak+i). Une fois la définition d'un segment effectuée (SEGj dans l'exemple), une nouvelle itération de la boucle de segmentation peut être mise en œuvre, par exemple en répétant le schéma décrit ci-dessus pour la définition du segment précédemment en cours de définition (SEGj) après incrémentation (204) de l'indice j de boucle de segmentation. Dans un ou plusieurs modes de réalisation, lorsque la définition d'un segment SEGj pour une itération j de la boucle de segmentation utilise une image candidate (I_Intrak+i) de la séquence d'images candidates (*I_Intraₖ*)*ₖ* identifiée lors de l'itération j, la première image (Id_SEGj+1) du segment (SEGj+1) consécutif au segment en cours de définition (SEGj) est déterminée (205b) en fonction de cette image candidate (I_Intrak+i) (par exemple comme étant cette image candidate : Id_SEGj+1 = I_Intrak+i), pour la mise en œuvre de l'itération suivante (j+1) de la boucle de segmentation.

Lorsqu'il est déterminé (206b) que l'image identifiée (I_Intrak+1) ne satisfait pas la contrainte Ci, différents cas de figure peuvent être envisagés, en fonction de la contrainte Ci.

Dans un premier cas de figure (206b1), pouvant se produire par exemple lorsqu'une contrainte de taille minimale est prise en compte, le parcours de la séquence vidéo d'entrée depuis l'image de début de segment Id_SEGj se poursuit, par exemple en incrémentant (201) le paramètre de taille du segment (T_seg) comme illustré sur la figure pour tester une nouvelle image de la séquence vidéo d'entrée dans le cadre d'une nouvelle itération de la boucle de parcours de la vidéo d'entrée. La vérification (202) décrite ci-dessus afin de déterminer si l'image atteinte lors du parcours de la séquence vidéo à partir de l'image Id_SEGj correspond à une image (I_Intrak+i+1) de la séquence d'images candidates (*I_Intraₖ*)*ₖ* peut être à nouveau effectuée, et la vérification (206) relative à la contrainte Ci pour cette image peut elle aussi éventuellement être à nouveau effectuée.

Dans un deuxième cas de figure (206b2), pouvant se produire par exemple lorsqu'une contrainte de taille maximale est prise en compte, l'image de fin du segment en cours de définition est déterminée (203b), par exemple sur la base d'une taille du segment en cours de définition préalablement déterminée. Le segment en cours de définition (SEGj) est alors défini, sur la base de son image de début et de son image de fin. Une fois la définition d'un segment effectuée (SEGj dans l'exemple), une nouvelle itération de la boucle de segmentation peut être mise en œuvre, par exemple en répétant le schéma décrit ci-dessus pour la définition du segment précédemment en cours de définition (SEGj) après incrémentation (204) de l'indice j de boucle de segmentation. Dans un ou plusieurs modes de réalisation, lorsque la définition d'un segment SEGj pour une itération j de la boucle de segmentation utilise une image qui n'est pas une image candidate de la séquence d'images candidates (*I_Intraₖ*)*ₖ* identifiée lors de l'itération j, la première image (Id_SEGj+1) du segment (SEGj+1) consécutif au segment en cours de définition (SEGj) est déterminée (205c) en fonction de l'image de fin (If_SEGj) déterminée pour le segment en cours de définition (SEGj), pour la mise en œuvre de l'itération suivante (j+1) de la boucle de segmentation.

Dans les modes de réalisation utilisant une contrainte de taille maximale, la contrainte de taille peut être vérifiée à la sortie négative (202b) du test (202) pour déterminer si l'image atteinte par le parcours de la séquence vidéo est ou non une image candidate. Ainsi, il peut être vérifié dans la négative que la taille maximum prédéfinie des segments n'est pas déjà atteinte, auquel cas il pourra être assigné au segment en cours de définition une taille prédéterminée.

Les figures 5a et 5c illustrent des exemples de modes de réalisation du procédé proposé. La figure 5a illustre une séquence vidéo SEQ_video, représentée par un axe temporel, comportant quatre changements de scène (SC1 ; SC2 ; SC3 ; SC4) et un ordre externe OE1. Comme expliqué précédemment, les images correspondant à des changements de scène d'une séquence vidéo sont typiquement encodées selon un mode de codage de type à prédiction par corrélation spatiale (par exemple un mode de codage intra spécifié par un standard d'encodage vidéo tel que H.264, H.265, H.262, MPEG-2, AVC et HEVC), afin d'obtenir une meilleure efficacité d'encodage vidéo. Par exemple, dans un ou plusieurs modes de réalisation, les images de la séquence vidéo d'entrée identifiées comme correspondant à un changement de scène seront identifiées comme devant être codées selon un mode intra. Dans un mode de réalisation, ces images pourront être identifiées dans la séquence comme étant de type intra.

La figure 5b illustre un exemple de schéma conventionnel de découpage en segments de tailles identiques T de la séquence vidéo SEQ_video. Les segments successifs SEG1 ; SEG2 ; SEG3 ; SEG4 et SEG5 sont définis par une image de type intra de début de segment (I_{SEG1}, I_{SEG2}, I_{SEG3}, I_{SEG4} et I_{SEG5}), et une image de type intra de fin de segment, l'image de fin d'un segment correspondant à l'image de début du segment suivant. Comme chaque image correspondant dans la séquence vidéo SEQ_video à un changement de scène (SC1 ; SC2 ; SC3 ; SC4) sera de préférence encodée comme étant de type intra (I_{SC1}, I_{SC2}, I_{SC3}, I_{SC4}), et que chaque image correspondant dans la séquence vidéo SEQ_video à un ordre externe (OE1) sera aussi encodée comme étant de type intra (I_{OE1}), le nombre total d'images de type intra dans la séquence d'entrée SEQ_video illustrée sur la figure 5b sera égal à 10 (I_{SEG1}, I_{SEG2}, I_{SEG3}, I_{SEG4} et I_{SEG5}, I_{SC1,} I_{SC2}, I_{SC3}, I_{SC4} et I_{OE1}).

La figure 5c illustre un exemple de segmentation (découpage en segments) de la séquence vidéo SEQ_video d'entrée selon un ou plusieurs modes de réalisation du procédé proposé. Comme décrit précédemment, les images correspondant à des changements de scène d'une séquence vidéo seront typiquement encodées selon un mode de codage de type à prédiction par corrélation spatiale, et pourront par exemple être identifiées dans la séquence comme étant de type intra. Le procédé proposé permet avantageusement de faire varier la taille des segments T_var issus de la segmentation d'une séquence vidéo, en définissant un segment sur la base de deux images à encoder selon un mode de codage de type à prédiction par corrélation spatiale (par exemple par deux images de type intra), sans imposer de taille unique aux segments issus du découpage en segments. Par exemple, la première image à encoder selon un mode de codage de type à prédiction par corrélation spatiale peut être choisie comme image de début d'un segment en cours de définition, et la deuxième image à encoder selon un mode de codage de type à prédiction par corrélation spatiale peut être choisie comme image de début du segment précédant ou suivant, selon les cas, immédiatement le segment en cours de définition. Par exemple, la première image à encoder selon un mode de codage de type à prédiction par corrélation spatiale peut être choisie comme image de début d'un segment en cours de définition, et l'image de fin du segment en cours de définition pourra être déterminée sur la base de la deuxième image lorsque celle-ci définit le début du segment suivant. On pourra dans ce cas choisir comme image de fin du segment en cours de définition l'image de la séquence vidéo précédant immédiatement dans la séquence vidéo la deuxième image. Dans un ou plusieurs modes de réalisation, chacune de ces deux images pourra être identifiée comme image à encoder selon un mode de codage de type à prédiction par corrélation spatiale du fait qu'elle correspond à un changement de scène ou à un ordre externe, comme décrit précédemment.

En référence aux figures 5a et 5c, un premier segment (SEG1) pourra être défini sur la base des images (I_{SC1} et I_{SC2}) de la séquence vidéo SEQ_video identifiées comme correspondant respectivement aux deux premiers changements de scène (SC1 et SC2) immédiatement successifs dans la séquence vidéo. L'image de début choisie pour ce premier segment pourra correspondre à l'image I_{SC1}, et l'image de fin choisie pour ce premier segment à l'image précédant immédiatement dans la séquence vidéo SEQ_video l'image I_{SC2}. Un deuxième segment (SEG2) pourra être défini de manière similaire sur la base des images (I_{SC2} et I_{OE1}) de la séquence vidéo SEQ_video identifiées comme correspondant respectivement au deuxième changement de scène identifié dans la séquence vidéo SEQ_video, et à l'ordre externe (OE1) reçu pour l'encodage d'une image de la séquence positionnée dans la séquence SEQ_video postérieurement à l'image correspondant au deuxième changement de scène (SC2) et antérieurement à l'image correspondant au troisième changement de scène (SC3). Un troisième segment (SEG3) pourra être défini de manière similaire sur la base des images (I_{OE1} et I_{SC3}) de la séquence vidéo SEQ_video identifiées comme correspondant respectivement à l'ordre externe (OE1) reçu pour l'encodage d'une image de la séquence positionnée dans la séquence SEQ_video postérieurement à l'image correspondant au deuxième changement de scène (SC2) et antérieurement à l'image correspondant au troisième changement de scène (SC3), et au troisième changement de scène (SC3) identifié dans la séquence vidéo SEQ_video. Un quatrième segment (SEG4) pourra être défini de manière similaire sur la base, d'une part de l'image (I_{SC4}) de la séquence vidéo SEQ_video identifiée comme correspondant au quatrième changement de scène (SC4), et d'autre part d'une image de la séquence vidéo SEQ_video positionnée dans la séquence postérieurement à l'image (I_{SC4}) de la séquence vidéo SEQ_video identifiée comme correspondant au quatrième changement de scène (SC4), et identifiée comme correspondant au premier changement de scène ou au premier ordre externe suivant quatrième changement de scène (SC4) dans la séquence vidéo SEQ_video. Cette dernière image du cinquième segment pourra, dans un ou plusieurs modes de réalisation, être identifiée en parcourant la séquence vidéo SEQ_video à partir de l'image correspondant au quatrième changement de scène (SC4).

Ainsi, à la différence des schémas conventionnels où des images peuvent être identifiées comme devant être encodées selon un mode de codage de type à prédiction spatiale du fait qu'elles ont été sélectionnées pour être des images de début de segments de taille fixe, les segments de la séquence vidéo SEQ_video pourront dans un ou plusieurs modes de réalisation être définis sur la base d'une séquence d'images préalablement identifiées dans la séquence vidéo SEQ_video comme devant être encodées selon un mode de codage de type à prédiction spatiale. Par exemple, dans un ou plusieurs modes de réalisation, les segments de la séquence vidéo SEQ_video pourront être définis sur la base d'une séquence d'images identifiées dans la séquence vidéo SEQ_video comme étant de type intra. Par exemple, dans un ou plusieurs modes de réalisation, les segments de la séquence vidéo SEQ_video pourront être définis sur la base d'une séquence d'images identifiées dans la séquence vidéo SEQ_video comme correspondant à un changement de scène ou à un ordre externe reçu pour l'encodage des images de la séquence vidéo SEQ_video.

Comme illustré par l'exemple de la figure 5c, la segmentation de la séquence SEQ_video telle que proposée conduira à une diminution du nombre d'images dans la séquence segmentée à encoder selon un mode de codage de type à corrélation spatiale (le nombre d'images de type intra passant de 10 dans l'exemple de la figure 5b à 5 dans l'exemple de la figure 5c), ce qui produira avantageusement une amélioration de l'efficacité d'encodage de la séquence vidéo ainsi segmentée.

Dans un ou plusieurs modes de réalisation, la détermination de segments consécutifs de tailles variables à partir d'une séquence vidéo peut prendre en compte une contrainte de taille ou de durée minimale de chaque segment, et/ou une contrainte de taille ou de durée maximale de chaque segment. Les figures 6a et 6b illustrent un exemple non limitatif de mise en œuvre du procédé proposé dans lequel une contrainte de taille de segment minimale Mi et une contrainte de taille de segment maximale Ma sont utilisées. L'homme du métier pourra se rendre compte que, bien que l'exemple illustré par les figures 6a et 6b envisage l'utilisation de deux contraintes de taille (taille minimum et taille maximum), cet exemple n'est pas limitatif et que le procédé proposé peut être mis en œuvre, selon différents modes de réalisation, en n'utilisant aucune contrainte de taille, ou en utilisant une ou plusieurs contraintes de taille.

Comme illustré sur la figure 6a, on considère un exemple de séquence vidéo SEQ_video qui comprend quatre changements de scène (SC1 ; SC2 ; SC3 ; SC4). Le premier changement de scène SC1 est traité selon le procédé décrit précédemment, ce qui conduit à la définition d'un premier segment 701 pour la séquence vidéo SEQ_video, sur la base des images de la séquence correspondant respectivement aux deux premiers changements de scène (SC1, SC2) successifs identifiés dans la séquence. Dans un mode de réalisation, la première image du segment 701 correspond au premier changement de scène (SC1) et la dernière image du segment 701 correspond à l'image précédant immédiatement l'image correspondant au deuxième changement de scène (SC2).

Dans un ou plusieurs modes de réalisation, la détermination du segment suivant le segment 701 précédemment défini peut comprendre la détermination de l'image correspondant au deuxième changement de scène SC2 comme première image du segment suivant, puis l'incrémentation d'un paramètre de taille du segment selon une boucle itérative, à partir d'une valeur initiale, pour parcourir la séquence vidéo SEQ_video de manière à déterminer la prochaine image de la séquence devant être encodée selon un mode de codage de type à prédiction par corrélation spatiale, par exemple la prochaine image déterminée comme étant de type intra parce que correspondant à un changement de scène ou à un ordre externe. Dans l'exemple illustré, l'image correspondant au troisième changement de scène (SC3) est détectée comme étant la première image de type intra suivant dans la séquence vidéo l'image correspondant au deuxième changement de scène (SC2).

Dans les modes de réalisation dans lesquels un critère de taille ou de durée minimum est pris en compte, ce critère peut être appliqué par le biais d'une première valeur de seuil (Mi) correspondant à une taille ou une durée minimum pour chaque segment. La distance *ΔSC* séparant dans la séquence vidéo SEQ_video l'image correspondant au troisième changement de scène (SC3) de l'image choisie pour être la première image du segment en cours de définition (dans l'exemple illustré l'image correspondant au deuxième changement de scène (SC2)), exprimée en fonction du mode de réalisation selon une unité de mesure choisie (durée, nombre d'images, quantité de mémoire, etc.), peut être comparée à la première valeur de seuil (Mi) (de préférence exprimée dans la même unité de mesure), pour déterminer si elle est supérieure (ou, en fonction du mode de réalisation supérieure ou égale) à la première valeur de seuil (Mi).

Dans le cas où la distance *ΔSC* séparant dans la séquence vidéo SEQ_video l'image choisie pour être la première image du segment en cours de définition (dans l'exemple illustré l'image correspondant au deuxième changement de scène (SC2)) de la première image, parmi les images suivant dans la séquence vidéo l'image choisie pour être la première image du segment en cours de définition, identifiée comme devant être encodée selon un mode de codage de type à prédiction par corrélation spatiale, est inférieure à la première valeur de seuil (Mi) (dans l'exemple illustré l'image correspondant au troisième changement de scène (SC3)), cette image n'est pas utilisée dans la détermination du segment en cours de définition. Dans un ou plusieurs modes de réalisation, le parcours de la séquence vidéo SEQ_video pour identifier la prochaine image, parmi les images suivant dans la séquence vidéo l'image choisie pour être la première image du segment en cours de définition, se poursuit. Dans l'exemple illustré sur la figure 6a, l'image I_{SC3} correspondant au troisième changement de scène SC3 n'est pas prise en compte dans la détermination du deuxième segment, et la séquence vidéo SEQ_video est parcourue, à partir de cette image (I_{SC3}), par exemple jusqu'à ce que l'image I_{SC4} correspondant au troisième changement de scène SC4 soit identifiée. La vérification que le segment ainsi constitué aurait la taille minimum voulue (Mi) est à nouveau effectuée. Dans le cas où la contrainte de taille minimum n'est pas respectée, le processus décrit ci-dessus est répété, et la séquence vidéo est à nouveau parcourue pour déterminer la prochaine image, parmi les images suivant dans la séquence vidéo l'image choisie pour être la première image du segment en cours de définition. Dans le cas où la contrainte de taille minimum est respectée, la détermination du segment en cours de définition se poursuit, avec éventuellement l'application d'autres contraintes (par exemple une contrainte de taille maximum). Dans l'exemple illustré sur la figure 6a, l'image I_{SC4} correspondant au quatrième changement de scène SC4 est identifiée, et la comparaison de la distance entre l'image I_{SC4} correspondant au quatrième changement de scène SC4 et l'image I_{SC3} correspondant au troisième changement de scène SC3 montre que cette distance est supérieure au seuil de taille minimum Mi, de sorte que l'image I_{SC4} correspondant au quatrième changement de scène SC4 est sélectionnée comme candidate pour définir l'image sur la base de laquelle la dernière image du segment en cours de définition pourra être déterminée, avant éventuellement l'application d'autres contraintes.

La prise en compte d'un critère de taille minimale des segments permet avantageusement d'éviter de définir des segments lors de la segmentation d'une séquence vidéo dont la taille est trop faible, au détriment de l'efficacité de codage de la séquence, lorsque la séquence vidéo contient des images correspondant à des changements de scène successifs qui sont proches l'un de l'autre dans la séquence vidéo.

La prise en compte d'un critère de taille maximale peut s'effectuer de manière similaire à ce qui est décrit ci-dessus pour un critère de taille minimale : en référence à la figure 6a, un critère de taille maximale peut être testé sur chaque image déterminée, lors du parcours de la séquence vidéo SEQ_video à partir de la première image du segment en cours de définition (702) (correspondant au deuxième changement de scène (SC2)), comme pouvant potentiellement être choisie pour être l'image sur la base de laquelle la dernière image du segment en cours de définition (702) est déterminée.

Dans les modes de réalisation dans lesquels un critère de taille ou de durée maximum est pris en compte, ce critère peut être appliqué par le biais d'une deuxième valeur de seuil (Ma) correspondant à une taille ou une durée maximum pour chaque segment. Dans un ou plusieurs modes de réalisation, la distance *ΔSC* séparant, dans la séquence vidéo SEQ_video, l'image candidate pour être l'image de début du segment suivant, sur la base de laquelle la dernière image du segment en cours de définition (702) est déterminée, de l'image choisie pour être la première image du segment (702) en cours de définition (dans l'exemple illustré l'image correspondant au deuxième changement de scène (SC2)), exprimée en fonction du mode de réalisation selon une unité de mesure choisie (durée, nombre d'images, quantité de mémoire, etc.), peut être comparée à la deuxième valeur de seuil (Ma) (de préférence exprimée dans la même unité de mesure), pour déterminer si elle est inférieure (ou, en fonction du mode de réalisation inférieure ou égale) à la deuxième valeur de seuil (Ma).

Dans le cas où la distance *ΔSC* est inférieure à la deuxième valeur de seuil (Ma), la détermination du segment (702) se poursuit éventuellement avec l'application d'autres contraintes. Dans l'exemple illustré sur la figure 6a, l'image I_{SC4} correspondant au quatrième changement de scène SC4 est identifiée, et la comparaison de la distance entre l'image I_{SC4} correspondant au quatrième changement de scène SC4 et l'image I_{SC2} correspondant au deuxième changement de scène SC2 montre que cette distance est inférieure au seuil de taille maximum Ma, de sorte que l'image I_{SC4} correspondant au quatrième changement de scène SC4 est sélectionnée comme candidat pour définir la première image du segment suivant le segment en cours de définition, sur la base de laquelle la dernière image du segment en cours de définition peut être déterminée, avant éventuellement l'application d'autres contraintes.

Dans le cas où la distance *ΔSC* est supérieure à la deuxième valeur de seuil (Ma), le segment en cours de définition est déterminé de manière à avoir une taille prédéfinie (T). Ce cas de figure est illustré sur la figure 6b où la distance entre l'image correspondant au changement de scène SC4 et l'image correspondant au changement de scène SC2, choisie pour être la première image du segment (712) en cours de définition, une fois un premier segment (710) défini, est supérieure au seuil de taille maximale Ma.

Ainsi, en référence à la figure 6a, dans un ou plusieurs modes de réalisation, le segment 702 en cours de configuration ne peut être paramétré avec une taille de segment T_seg finale (T). En effet, la taille de segment obtenue après incrémentation (par exemple d'un pas ΔT) itérative et détection du changement de scène SC3, c'est-à-dire correspondant à l'écart entre les scènes SC3 et SC2, ne respecte pas la contrainte de taille minimale de segment. Le changement de scène SC3 est ignoré, et le module reprend son analyse pour déterminer le prochain changement de scène. Pendant cette nouvelle phase de détection d'un changement de scène, la taille de segment courante T_seg est de nouveau incrémentée par la valeur *ΔT.* A la détection du changement de scène SC4, la valeur T_seg obtenue, et correspondant à l'écart entre les scènes SC2 et SC4, est de nouveau comparée aux contraintes de durée précédentes. Pour ce nouveau changement de scène SC4, la valeur T_seg obtenue respecte les contraintes de taille de segment minimale et maximale. Par conséquent, le segment 702 est encodé (Enc_SEGS) avec pour première image de type intra de segment I_{SEG}, l'image de type intra du changement de scène SC2 I_{SC2} et une taille de segment T (T_seg) correspondant à l'écart entre les deux changements de scène SC2 et SC4. Le nouveau segment 702 contient également le changement de scène SC3 (I_{SC3}).

La figure 6b illustre le cas où le changement de scène SC4 est situé trop loin dans la séquence vidéo pour permettre le respect de la contrainte de taille de segment maximale Ma. Ainsi, comme expliqué précédemment, après avoir ignoré le changement de scène SC3, le module 102 reprend son analyse pour détecter le prochain changement de scène. Au cours du processus de détection, la taille du T_seg du segment 712 en cours de paramétrage est incrémentée. Au cours de l'incrémentation, si la taille du segment T_seg atteint la contrainte de taille maximale de segment Ma, alors le segment 712 est encodé (Enc_SEGS) avec pour première image de type intra de segment I_{SEG}, l'image de type intra du changement de scène SC2 (I_{SC2}) et une taille de segment T prédéterminée, par exemple égale à la valeur maximale permise de taille de segment Ma. Le nouveau segment 702 contient également le changement de scène SC3 (I_{SC3}).

Selon un ou plusieurs modes de réalisation, il est possible de n'utiliser qu'une contrainte de durée de taille minimale de segment ou qu'une contrainte de durée de taille maximale de segment pour le paramétrage et l'encodage des segments.

En outre, dans un ou plusieurs modes de réalisation, des niveaux de priorité peuvent être définis et associés respectivement à des contraintes en vue de leur utilisation lors de la définition d'un ou plusieurs segments pour la segmentation d'une séquence vidéo.

Dans un ou plusieurs modes de réalisation, les contraintes utilisées pour la segmentation d'une séquence vidéo peuvent ne pas être utilisées pour la définition de certains au moins des segments issus de la segmentation. Par exemple, la définition du premier segment défini pour une séquence et/ou du dernier segment défini pour une séquence peut ne pas utiliser une ou plusieurs contraintes qui peuvent être utilisées lors de la définition d'autres segments de la séquence.

Dans un ou plusieurs modes de réalisation, des priorités peuvent être définies pour des catégories d'images pour l'utilisation d'une ou plusieurs contraintes pour la définition d'un segment. Par exemple, une première priorité P1 peut être assignée aux images correspondant à un changement de scène, et une deuxième priorité P2 peut être assignée aux images correspondant à un ordre externe. Lors de la définition d'un segment, la priorité associée au type d'une image envisagée comme image candidate pour définir un segment (première image du segment ou dernière image du segment) peut être prise en compte pour déterminer si une ou plusieurs contraintes, par exemple de taille, doivent être prises en compte pour cette image candidate.

Dans un ou plusieurs modes de réalisation, si la priorité associée au type de l'image candidate Icand est inférieure à une priorité associée à une contrainte (P(Icand) < P(contrainte)), la contrainte pourra être appliquée pour tester l'image candidate. A l'inverse, si la priorité associée au type de l'image candidate Icand est supérieure à la priorité associée à une contrainte (P(Icand) > P(contrainte)), la contrainte pourra ne pas être appliquée et l'image candidate ne pas être testée pour cette contrainte. Par exemple, le procédé proposé pourra être configuré pour qu'une demande externe (correspondant à un ordre externe) soit traitée en priorité, c'est-à-dire par exemple sans appliquer de contraintes de taille (taille minimum et/ou taille maximum). Ainsi, le procédé proposé pourra produire des segments dont la taille ne correspond pas à des critères de taille utilisés par ailleurs, du fait qu'ils sont définis avec des images dont le type correspond à un niveau de priorité supérieur à celui des contraintes (par exemple une image de type correspondant à un ordre externe).

Dans un ou plusieurs modes de réalisation, une priorité maximale pourra être assignée à la définition de segments sur la base d'images pour lesquelles une requête de création de segment a été reçue par l'encodeur vidéo. Un segment pourra ainsi être créé sur la base d'une image pour laquelle un tel ordre externe a été reçu, quand bien même sa taille ne remplit pas un critère de taille minimale de segment et/ou tout autre critère, notamment de taille.

Dans un ou plusieurs modes de réalisation, le procédé proposé peut comprendre la détermination, dans l'ensemble d'images de la séquence vidéo d'entrée, d'une pluralité d'images de référence dont les positions dans la séquence sont deux-à-deux séparées par une distance prédéterminée. Cette distance prédéterminée peut avantageusement correspondre à une durée moyenne souhaitée pour les sous-ensembles (segments) d'images issus de la segmentation de la séquence vidéo.

Un segment peut alors être défini en déterminant dans l'ensemble d'images une image de début du segment, et en déterminant une image de référence positionnée dans la séquence vidéo à partir de l'image de début du segment. Une image de début du segment suivant immédiatement, dans une suite des segments consécutifs, le segment en cours de définition, peut alors être déterminée, dans la pluralité d'images à encoder selon un mode de codage de type à prédiction par corrélation spatiale, parmi les images positionnées dans la séquence vidéo autour de l'image de référence et à une distance inférieure à un seuil de variation prédéterminé. L'image de fin du segment en cours de définition peut être déterminée sur la base de l'image de début du segment suivant.

La figure 7 illustre la mise en œuvre du procédé proposé selon un ou plusieurs modes de réalisation. Ces modes de réalisation peuvent être réalisés séparément ou en combinaison avec les autres modes de réalisation présentés précédemment.

Dans un ou plusieurs modes de réalisation, la mise en œuvre du procédé proposé peut utiliser des contraintes de durée (ou, de manière équivalente, de taille) définies sur la base d'un paramètre de durée ou de distance prédéterminée, selon les cas, qui peut par exemple correspondre à une durée moyenne de segment (T_{AV}), et d'un paramètre de seuil de variation prédéterminé, aussi appelé gigue (ou en anglais, « jitter ») dans ce qui suit.

Dans un ou plusieurs modes de réalisation, la durée moyenne (T_{AV}) peut être choisie pour définir une fréquence moyenne à laquelle l'encodeur doit encoder un nouveau segment. Par exemple, un utilisateur peut définir une période moyenne égale à deux secondes contraignant l'encodeur à encoder un nouveau segment toutes les 2 secondes.

Le paramètre de période moyenne (T_{AV}) est alors associé à un intervalle de variation ou, de manière équivalente, à un seuil de variation, qui définit un intervalle autour d'une image correspondant à la période moyenne dans lequel l'encodeur peut être contraint de choisir l'image de début du segment en cours de définition ou l'image de début du segment suivant le segment en cours de définition.

Dans un ou plusieurs modes de réalisation l'intervalle de variation peut définir une plage en durée, et l'encodeur peut être configuré pour rechercher et choisir un changement de scène présent dans cet intervalle pour la création d'un nouveau segment. Par exemple, l'utilisateur peut associer une période moyenne de 4 secondes à un intervalle d'une seconde.

La figure 7 illustre un exemple de séquence vidéo (SEQ_video) qui comporte trois changements de scène (SC1, SC2, SC3). Selon un ou plusieurs modes de réalisation, lors d'un processus d'encodage, le premier changement de scène (SC1) peut être choisi pour définir l'image de début de segment du segment en cours de définition.

Dans un mode de réalisation, l'encodeur peut déterminer si le changement de scène SC1 est compris dans l'intervalle (JI) 831 autour d'une première image de référence IR1. Les images de l'ensemble d'images de la séquence vidéo (SEQ_video) peuvent ensuite être parcourues, par exemple par itération d'une boucle de parcours comme décrit ci-dessus, à partir de l'image de début de segment.

Le parcours de la séquence vidéo peut se poursuivre jusqu'à la détection du prochain changement de scène (SC2). Sur détection de ce changement de scène (SC2), il peut être vérifié que ce changement de scène détecté est positionné dans un intervalle (832) de variation d'amplitude prédéterminée autour de la position d'une deuxième image de référence IR2.

Si tel est le cas, comme illustré sur la figure 7, l'image correspondant au deuxième changement de scène (SC2) peut être déterminée comme image de début de segment du segment suivant le segment en cours de définition, et l'image de fin du segment en cours de définition peut être déterminée sur la base de l'image correspondant au deuxième changement de scène (SC2). Ainsi, le segment en cours de définition (801) est défini sur la base d'une taille correspondant à l'écart entre les deux changements de scène SC1 et SC2.

Le processus de segmentation de la séquence vidéo peut se poursuivre pour déterminer une image de fin de segment du segment dont l'image de début de segment a été précédemment déterminée comme étant l'image correspondant au deuxième changement de scène (SC2). Le parcours de la séquence vidéo SEQ_video peut se poursuivre jusqu'à la détection de l'image correspondant au troisième changement de scène (SC3). Sur détection de ce troisième changement de scène (SC3), il peut être vérifié que ce changement de scène détecté est positionné dans un intervalle (833) de variation d'amplitude (Ji) prédéterminée autour de la position d'une troisième image de référence IRi.

Si tel n'est pas le cas, comme illustré sur la figure 7, l'image correspondant au troisième changement de scène (SC3) peut ne pas être prise en compte pour la détermination de l'image de début de segment du segment suivant le segment en cours de définition. Dans un ou plusieurs modes de réalisation, l'image suivant, dans la séquence vidéo, l'image correspondant au troisième changement de scène (SC3) et positionnée dans l'intervalle (833) de variation d'amplitude (Ji) prédéterminée autour de la troisième image de référence IR3 peut être déterminée comme image de début de segment du segment suivant le segment en cours de définition, et l'image de fin du segment en cours de définition peut être déterminée sur la base de cette image. Par exemple, le parcours de la séquence vidéo peut se poursuivre jusqu'à atteindre la première image dans l'intervalle (833) de variation d'amplitude (Ji) prédéterminée autour de la troisième image de référence IR3. L'image de fin du segment en cours de définition peut être déterminée sur la base de l'image correspondant à cette image positionnée dans l'intervalle (833) de variation d'amplitude (Ji) prédéterminée autour de la troisième image de référence IR3.

Dans le cas de figure illustré sur la figure 7, le segment 802 ainsi défini comporte, outre l'image de type intra (I_{SC2}) du changement de scène SC2, l'image de type intra (I_{SC3}) du changement de scène SC3.

Dans un ou plusieurs modes de réalisation, lorsque deux changements de scène sont présents dans un intervalle de variation d'amplitude autour d'une image de référence, une sélection, par exemple par tirage aléatoire, peut choisir un des changements de scène de l'intervalle pour démarrer un nouveau segment.

Dans d'autres modes de réalisation, lorsque deux changements de scène sont présents dans un intervalle de variation d'amplitude autour d'une image de référence, une analyse des images positionnées dans la séquence après ces deux changements de scène peut être effectuée, par exemple grâce à un délai imposé au flux distribué en direct qui doit être segmenté et encodé. Par exemple, dans le cas d'un ordre externe situé après ces deux changements de scène, le deuxième changement de scène, situé temporellement après le premier, peut être déterminé comme image de début de segment du segment suivant le segment en cours de définition.

Comme indiqué précédemment, selon un ou plusieurs modes de réalisation, lors des opérations de définition d'un nouveau segment, tout ordre externe détecté peut être pris en compte prioritairement, même si cela engendre un non-respect de contraintes de durée moyenne de segment imposées par l'utilisateur.

Il est possible d'utiliser en combinaison différentes contraintes de durée pour la définition d'un segment selon un ou plusieurs modes de réalisations du procédé proposé, comme par exemple une combinaison d'une contrainte de taille maximale, une contrainte de taille minimale, et/ou une contrainte basée sur une taille moyenne de segment et d'un ou plusieurs intervalles de fluctuation aux bornes autour de cette taille moyenne.

Ainsi, des modes de réalisation du procédé proposé permettent de paramétrer des tailles de segments qui maintiennent l'efficacité globale d'encodage en interdisant les segments trop grands, et diminuent l'impact visuel pour l'utilisateur en interdisant des segments trop courts.

La figure 10 illustre un exemple d'architecture d'un dispositif d'encodage d'une séquence vidéo pour la mise en œuvre du procédé proposé.

En référence à la figure 10, le dispositif 1000 comprend un contrôleur 1002, couplé de manière opérationnelle à une interface d'entrée 1001, à une interface de sortie 1006 et à une mémoire 1003, qui pilote un module d'analyse de données vidéos (ensemble d'images) 1005 et une unité d'encodage 1004 pour l'encodage de sous-ensembles d'images d'une séquence vidéo.

L'interface d'entrée 1001 est configurée pour recevoir en entrée un ensemble d'images correspondant à une séquence vidéo ou un flux vidéo distribué en direct.

Le contrôleur 1002 est configuré pour piloter le module d'analyse de données vidéos 1005 et l'unité d'encodage 1004 pour la mise en œuvre d'un ou de plusieurs modes de réalisation du procédé proposé.

Le module d'analyse de données vidéo 1005 peut être configuré pour la mise en œuvre d'un ou de plusieurs modes de réalisation du procédé de segmentation proposé. En particulier, il peut être configuré pour recevoir une information indiquant au moins une image dans l'ensemble d'images à encoder selon un mode de codage de type à prédiction par corrélation spatiale et/ou effectuer une analyse d'une séquence vidéo reçue sur l'interface d'entrée, pour déterminer une information indiquant au moins une image dans l'ensemble d'images à encoder selon un mode de codage de type à prédiction par corrélation spatiale. Le module d'analyse de données vidéo 1005 peut en outre être configuré pour déterminer, dans l'ensemble d'images de la séquence vidéo, des segments d'images consécutifs, les tailles respectives de certains au moins des segments étant fonctions de l'au moins une image à encoder selon le mode de codage de type à prédiction par corrélation spatiale.

L'unité d'encodage 1004 peut être configurée pour effectuer l'encodage des segments définis. En fonction de l'architecture choisie, l'unité d'encodage 1004 peut comprendre ou non le module d'analyse de données vidéo.

Le dispositif 1000 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire, l'unité de stockage de données ou le support de stockage amovible contient des instructions qui, lorsqu'elles sont exécutées par le contrôleur 1002, amènent ce contrôleur 1002 à effectuer ou contrôler les parties interface d'entrée 1001, module d'analyse de données vidéos 1005, encodage de sous-ensembles d'images et/ou traitement de données des exemples de mise en œuvre du procédé proposé décrits dans les présentes. Le contrôleur 1002 peut être un composant implémentant un processeur ou une unité de calcul pour l'encodage de sous-ensembles d'images d'une séquence vidéo selon le procédé proposé et le contrôle des unités 1001, 1002, 1003, 1004, 1005, 1006 du dispositif 1000.

En outre, le dispositif 1000 peut être mis en œuvre sous forme logicielle, comme décrit ci-dessus, ou sous forme matérielle, comme un circuit intégré spécifique application (ASIC), ou sous forme d'une combinaison d'éléments matériels et logiciels, comme par exemple un programme logiciel destiné à être chargé et exécuté sur un composant de type FPGA (Field Programmable Gate Array).

Le procédé ne se limite pas aux exemples de modes de réalisation décrits ci-avant, seulement à titre d'exemple, mais elle englobe toutes les variantes que pourra envisager l'homme de l'art dans le cadre des revendications ci-après.

### Application industrielle

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé de pilotage proposé et le dispositif pour la mise en œuvre d'un mode de réalisation du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous-combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Procédé, mis en œuvre par des moyens informatique, de traitement d'une séquence vidéo comprenant un ensemble d'images, le procédé comprenant :
obtenir une information indiquant au moins une image dans l'ensemble d'images à encoder selon un mode de codage de type à prédiction par corrélation spatiale ;
déterminer, dans l'ensemble d'images, des sous-ensembles d'images consécutifs ; et
encoder la séquence vidéo sur la base des sous-ensembles d'images consécutifs déterminés ;
dans lequel les tailles respectives de certains au moins des sous-ensembles d'images sont fonctions de l'au moins une image à encoder selon le mode de codage de type à prédiction par corrélation spatiale.

2. Procédé selon la revendication 1, comprenant en outre : déterminer dans l'ensemble d'images au moins une image à encoder selon un mode de codage de type à prédiction par corrélation spatiale.

3. Procédé selon la revendication 1, dans lequel la détermination d'au moins un sous-ensemble comprend : déterminer, parmi l'au moins une image à encoder selon le mode de codage de type à prédiction par corrélation spatiale, une image de début du sous-ensemble.

4. Procédé selon l'une quelconque des revendications précédentes, dans lequel l'au moins une image à encoder selon un mode de codage de type à prédiction par corrélation spatiale correspond à un changement de scène dans la séquence vidéo, ou à une requête de création de sous-segment.

5. Procédé selon l'une quelconque des revendications précédentes, dans lequel la détermination d'au moins un sous-ensemble comprend :
déterminer, dans l'ensemble d'images, une image de début du sous-ensemble ;
déterminer, parmi les images positionnées dans la séquence à partir de l'image de début du sous-ensemble, une image de début du sous-ensemble suivant immédiatement, dans une suite des sous-ensembles d'images consécutifs, le sous-ensemble en fonction d'une image parmi la pluralité d'images à encoder selon le mode de codage de type à prédiction par corrélation spatiale ;
déterminer, parmi les images positionnées dans la séquence à partir de l'image de début du sous-ensemble, une image de fin du sous-ensemble sur la base de l'image de début du sous-ensemble suivant ;
déterminer le sous-ensemble comme comprenant l'image de début du sous-ensemble, l'image de fin du sous-ensemble, et les images de l'ensemble d'images positionnées dans la séquence entre l'image de début du sous-ensemble et l'image de fin du sous-ensemble.

6. Procédé selon l'une quelconque des revendications précédentes, dans lequel la détermination d'au moins un sous-ensemble utilise un critère relatif à la taille de l'au moins un sous-ensemble.

7. Procédé selon la revendication 5, dans lequel le critère est un critère de taille minimale et/ou un critère de taille maximale.

8. Procédé selon l'une quelconque des revendications précédentes, dans lequel la détermination d'au moins un sous-ensemble comprend :
déterminer, dans l'ensemble d'images, une image de début du sous-ensemble ;
déterminer, parmi les images positionnées dans la séquence à partir de l'image de début du sous-ensemble, une première image candidate dans la pluralité d'images à encoder selon un mode de codage du type à prédiction par corrélation spatiale ;
déterminer une distance entre l'image de début du sous-ensemble et la première image candidate ;
comparer la distance à un seuil correspondant à un critère de taille minimale ou à un critère de taille maximale ;
déterminer, dans l'ensemble d'images, une image de fin du sous-ensemble sur la base de la comparaison au seuil.

9. Procédé selon la revendication 8, comprenant, lorsque le seuil correspond à une taille minimale :
lorsque la distance est inférieure au seuil, déterminer, parmi les images positionnées dans la séquence à partir de la première image candidate, une deuxième image candidate dans la pluralité d'images à encoder selon un mode de codage du type à prédiction par corrélation spatiale ;
déterminer le sous-ensemble en utilisant la deuxième image candidate.

10. Procédé selon la revendication 8, comprenant, lorsque le seuil correspond à une taille maximale :
lorsque la distance est supérieure au seuil, déterminer, parmi les images positionnées dans la séquence à partir de l'image de début du sous-ensemble, une image de fin du sous-ensemble sur la base d'une taille prédéterminée de sous-segment.

11. Procédé selon l'une quelconque des revendications précédentes, comprenant en outre :
déterminer, dans l'ensemble d'images, une pluralité d'images de référence dont les positions dans la séquence sont deux-à-deux séparées par une distance prédéterminée ;
déterminer, dans l'ensemble d'images, pour au moins un sous-ensemble, une image de début du sous-ensemble ;
déterminer une image de référence positionnée dans la séquence à partir de l'image de début du sous-ensemble ;
déterminer, dans la pluralité d'images à encoder selon un mode de codage de type à prédiction par corrélation spatiale, parmi les images positionnées dans la séquence autour de l'image de référence et à une distance inférieure à un seuil de variation prédéterminé, une image de début du sous-ensemble suivant immédiatement, dans une suite des sous-ensembles d'images consécutifs, le sous-ensemble ;
déterminer, parmi les images positionnées dans la séquence à partir de l'image de début du sous-ensemble, une image de fin du sous-ensemble sur la base de l'image de début du sous-ensemble suivant.

12. Dispositif d'encodage de séquence vidéo, comprenant une interface d'entrée configurée pour recevoir un ensemble d'images de la séquence vidéo; et une unité d'encodage d'images, couplée de manière opérationnelle à l'interface d'entrée, et configurée pour effectuer un traitement de la séquence vidéo selon le procédé de l'une quelconque des revendications 1 à 11.

13. Programme d'ordinateur, chargeable dans une mémoire associée à un processeur, et comprenant des portions de code pour la mise en œuvre des étapes d'un procédé selon l'une quelconque des revendications 1 à 11 lors de l'exécution dudit programme par le processeur.

14. Ensemble de données représentant, par exemple par voie de compression ou d'encodage, un programme d'ordinateur selon la revendication 13.

15. Support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à encoder une séquence vidéo selon le procédé de l'une quelconque des revendications 1 à 11.
